# EUROPEAN PATENT APPLICATION

(11) **EP 4 203 156 A1**
(43) Date of publication of application: **28.06.2023**
(21) Application number: 22853500.1
(22) Date of filing: 04.08.2022
(51) Int. Cl.: H01M 50/211, H01M 50/178, H01M 50/249, H01M 10/6551, H01M 10/647, H01M 10/653, H01M 10/625, H01M 10/613, H01M 50/30

(54) **BATTERY PACK AND VEHICLE INCLUDING SAME**

(30) Priority: 04.08.2021 KR 20210102791; 17.06.2022 KR 20220074363; 03.08.2022 KR 20220096836
(71) Applicant: LG Energy Solution, Ltd., Seoul 07335 (KR)
(72) Inventor: PARK, Jin-Yong, Daejeon 34122 (KR); YOO, Jae-Min, Daejeon 34122 (KR); CHI, Ho-June, Daejeon 34122 (KR); KANG, Dal-Mo, Daejeon 34122 (KR)
(74) Representative: Goddar, Heinz J.
(86) International application number: PCT/KR2022/011588
(87) International publication number: WO 2023/014125

(57) **Abstract**

Disclosed is a battery pack and a vehicle including the same. The battery pack includes a plurality of pouch-type battery cells stacked in at least one direction; a pack case configured to accommodate the pouch-type battery cells in an inner space thereof; and a cell cover configured to at least partially surround at least some pouch-type battery cells among the plurality of pouch-type battery cells in the inner space of the pack case.

## Description

### TECHNICAL FIELD

The present application claims priority to Korean Patent Application No. 10-2021-0102791 filed on August 4, 2021, Korean Patent Application No. 10-2022-0074363 filed on June 17, 2022, and Korean Patent Application No. 10-2022-0096836 filed on August 3, 2022 in the Republic of Korea, the disclosures of which are incorporated herein by reference.

The present disclosure relates to a battery pack and a vehicle including the same, and more particularly, to a battery pack improved in energy density, cooling performance and the like, and a vehicle including the same.

### BACKGROUND ART

As technology development of and demand for various mobile devices, electric vehicles and energy storage systems (ESS) greatly increase, the interest and demand for secondary batteries as an energy source is rapidly increasing. Although nickel cadmium batteries or nickel hydrogen batteries have been mostly used as secondary batteries of the related art, because the batteries have almost no memory effect compared to nickel-based secondary batteries, recently, lithium secondary batteries that are freely charged and discharged, have very low self-discharge rate, and have high energy density have been widely used.

Such a lithium secondary battery mainly uses lithium-based oxides and carbon materials as positive electrode active materials and negative electrode active materials, respectively. The lithium secondary battery includes an electrode assembly in which a positive electrode plate and a negative electrode plate on which a positive electrode active material and a negative electrode active material are respectively coated are arranged with a separator interposed therebetween, and a sheath material, that is, a battery case, that seals and accommodates the assembly together with an electrolyte solution.

In general, secondary batteries may be classified according to the shape of the exterior into a can-type battery in which the electrode assembly is embedded in a metal can and a pouch-type battery in which the electrode assembly is embedded in a pouch of an aluminum laminate sheet.

Recently, battery packs have been widely used for driving or energy storage in medium-sized or large-sized devices such as electric vehicles or energy storage systems. A conventional battery pack includes one or more battery modules and a control unit for controlling charging and discharging of the battery pack, for example, a BMS (Battery Management System), inside a pack case. Here, the battery module is configured to include a plurality of battery cells inside a module case. That is, in the case of a conventional battery pack, a plurality of battery cells (secondary batteries) are accommodated inside the module case to configure each battery module, and one or more battery modules are accommodated inside the pack case to configure the battery pack.

In particular, the pouch-type battery has advantages in various aspects such as light weight and small dead space during stacking, but is vulnerable to external shocks and poor in assembling. Therefore, generally, a plurality of cells are modularized and then accommodated in a pack case to manufacture a battery pack. As a representative example, the conventional battery pack is configured by storing a plurality of pouch-type battery cells in a module case to form a battery module and then accommodating one or more battery modules in the pack case. Moreover, the conventional battery module, in many cases, as disclosed in the prior literature (Korean Unexamined Patent Publication No. 10-2015-0044599), or the like, a plurality battery cells are stacked using various components such as a stacking frame made of a plastic material, which is called a cartridge, plates provided at both ends in the cell stacking direction, and a fastening member such as a bolt. In addition, in many cases, the stacked body formed in this way and is accommodated in the module case again to form a module.

However, such a conventional battery pack may be disadvantageous in terms of energy density. Typically, in the process of accommodating a plurality of battery cells inside the module case to form a module, various components such as the module case or the stacking frame may unnecessarily increase the volume of the battery pack or reduce the space to be occupied by the battery cells. Moreover, the storage space of the battery cell may be reduced in order to secure the space occupied by the components themselves, such as the module case or the stacking frame, as well as assembly tolerances for these components. Therefore, in the conventional battery pack, there may be a limit in increasing the energy density.

In addition, the conventional battery pack may also be disadvantageous in terms of assembling property. In particular, in order to manufacture a battery pack, a plurality of battery cells are modularized to form a battery module, and then the battery module is accommodated in a pack case, which complicates the manufacturing process of the battery pack. Moreover, as disclosed in the prior literature, the process and structure of forming a cell stack by using a stacking frame, bolts, plates, and the like may be very complicated.

In addition, in the conventional battery pack, since the module case is accommodated inside the pack case and the battery cell is accommodated inside the module case, there is also a problem in that it is difficult to secure excellent cooling properties. In particular, when the heat of the battery cells accommodated inside the module case is discharged out of the pack case through the module case, the cooling efficiency may deteriorate and the cooling structure may be complicated.

### RELATED LITERATURES

### Patent Literature

Korean Unexamined Patent Publication No. 10-2015-0044599 (published on April 27, 2015)

### DISCLOSURE

### Technical Problem

The present disclosure is designed to solve the problems of the related art, and therefore the present disclosure is directed to providing a battery pack and a vehicle excellent in energy density, assembling and/or cooling properties.

However, the technical problems to be solved by the present disclosure are not limited to the above, and other problems not mentioned herein will be clearly understood by those skilled in the art from the following disclosure.

### Technical Solution

In one aspect of the present disclosure, there is provided a battery pack, comprising: a plurality of pouch-type battery cells stacked in at least one direction; a pack case configured to accommodate the pouch-type battery cells in an inner space thereof; and a cell cover configured to at least partially surround at least some pouch-type battery cells among the plurality of pouch-type battery cells in the inner space of the pack case.

Here, the cell cover may be configured to support the plurality of pouch-type battery cells in a standing state.

In addition, the cell cover may be configured to partially surround the pouch-type battery cell such that at least one side of the surrounded pouch-type battery cell is exposed toward the pack case.

In addition, the pouch-type battery cell may include an accommodation portion in which an electrode assembly is accommodated and an edge portion provided around the accommodation portion, and the cell cover may be configured to surround both sides of the accommodation portion of the surrounded pouch-type battery cell and a part of the edge portion.

In addition, the cell cover may be configured to cover both sides of the accommodation portion of the surrounded pouch-type battery cell and an upper edge portion.

In addition, the cell cover may include an upper cover configured to surround an upper part of the upper edge portion of the pouch-type battery cell; a first side cover configured to extend in a lower direction from one end of the upper cover and surround an outer side of the accommodation portion at one side of the surrounded pouch-type battery cell; and a second side cover configured to extend in the lower direction from the other end of the upper cover at a location spaced apart from the first side cover and surround an outer side of the accommodation portion at the other side of the surrounded pouch-type battery cell.

In addition, the pouch-type battery cell may include a sealing portion and a non-sealing portion as the edge portion, and the cell cover may be configured to surround at least a part of the sealing portion of the pouch-type battery cell and allow the non-sealing portion to be exposed.

In addition, the battery pack according to the present disclosure may further comprise a taping member configured to couple different ends of the cell cover to each other.

In addition, the cell cover may be configured in the form of one bent plate.

In addition, the pack case may include a heatsink, and the plurality of pouch-type battery cells may be coupled to the heatsink.

In addition, a thermal resin may be interposed between the heatsink and the plurality of pouch-type battery cells.

In addition, the heatsink may include a plurality of unit heatsinks spaced apart from each other.

In addition, an end of the cell cover may be interposed in a separated space between the plurality of unit heatsinks.

In addition, the heatsink may include an upper heatsink and a lower heatsink disposed at an upper portion and a lower portion of the cell cover, respectively.

In addition, the cell cover may be configured such that at least one side end thereof is fitted into the pack case.

In addition, the cell cover may have a perforation hole formed to discharge a flame or gas generated at the pouch-type battery cell.

In addition, the perforation hole of the cell cover may be provided to be widened when swelling occurs at the pouch-type battery cell.

In addition, the cell cover may include a cut portion configured to discharge a flame or gas generated at the pouch-type battery cell.

In addition, the cell cover may include a perforated portion formed in a dotted line form along a periphery of the cut portion.

In addition, the battery pack may further comprise a battery management system accommodated in the inner space of the pack case.

In addition, in another aspect of the present disclosure, there is also provided a vehicle, comprising the battery pack according to the present disclosure.

In addition, in another aspect of the present disclosure, there is also provided a cell assembly, comprising: a pouch-type battery cell; and a cell cover configured to at least partially surround both sides and one edge portion of an accommodation portion of the pouch-type battery cell and to expose the other edge portion of the pouch-type battery cell.

### Advantageous Effects

According to an embodiment of the present disclosure, a plurality of pouch-type battery cells may be stably accommodated inside the pack case without a stacking frame such as a plastic cartridge or a separate module case. Moreover, according to an embodiment of the present disclosure, a pouch-type battery cell having a case made of a soft material may be easily made in a solid form, so that pouch-type battery cells may be directly stacked inside the pack case more easily.

In particular, according to an embodiment of the present disclosure, a plurality of pouch-type battery cells may be easily stacked side by side in the horizontal direction while standing in the upper and lower directions.

According to an embodiment of the present disclosure, the energy density of the battery pack may be improved. Moreover, according to an embodiment of the present disclosure, since the battery cell is directly stored in the pack case without being modularized, the module case of the battery module is unnecessary. Accordingly, by reducing the space occupied by such a module case, more and more battery cells may be disposed inside the pack case. Therefore, the energy density of the battery pack may be further improved.

In addition, according to an embodiment of the present disclosure, the assembling property of the battery pack may be improved. In particular, according to an embodiment of the present disclosure, a process of preparing a battery module by accommodating pouch-type battery cells in a module case, a process of accommodating one or more battery modules prepared above in a pack case, or the like may not be performed. Accordingly, the manufacturing process may be simplified and the manufacturing time may be reduced.

In addition, according to an embodiment of the present disclosure, the number of battery cells surrounded by the cell cover may be easily changed. In particular, according to an embodiment of the present disclosure, by changing the width of the cell cover, it is possible to easily change the number of unit cells accommodated by the cell cover. Therefore, in this case, the capacity or output may be easily changed by one cell cover.

In addition, according to an embodiment of the present disclosure, for each cell unit, a bus bar or a terminal of each unit may be easily located at a side surface, an upper portion or a lower portion of each cell cover.

In addition, according to an embodiment of the present disclosure, in the process of accommodating the soft pouch-type battery cell inside the pack case, the cell cover may be gripped without directly gripping the pouch-type battery cell. Therefore, the process of handling the pouch-type battery cell may be performed more easily and safely. Moreover, in this case, it is possible to prevent the pouch-type battery cell from being damaged or broken during the cell handling process, such as storing the pouch-type battery cell inside the pack case.

In addition, according to an embodiment of the present disclosure, the cooling efficiency of the battery pack may be further improved. In particular, in an embodiment of the present disclosure, since a part of each pouch-type battery cell is directly exposed to the pack case, the heat of each pouch-type battery cell may be effectively discharged to the outside through the pack case.

In addition, according to an embodiment of the present disclosure, the surface cooling may be performed additionally through a large surface of the pouch-type battery cell.

In addition, according to an embodiment of the present disclosure, for each pouch-type battery cell, dual cooling may be easily implemented through the pack case and the cell cover.

In addition, according to an embodiment of the present disclosure, the safety of the battery pack may be improved. In particular, according to an embodiment of the present disclosure, the gas discharged from each battery cell may be smoothly discharged to the outside. Moreover, according to an embodiment of the present disclosure, it is possible to control the discharge direction of gas or flame discharged from the battery cell. Therefore, thermal runaway propagation between adjacent battery cells may be effectively prevented.

In addition, according to an embodiment of the present disclosure, the configuration of a long cell having a long length in a specific direction may be more easily provided. In addition, according to an embodiment of the present disclosure, the processability or assemblyability may be improved when manufacturing a cell assembly or a battery pack employing such a long cell.

In addition, according to an embodiment of the present disclosure, by adjusting the length or width of the cell cover, it may be possible to adaptively cope with various types of battery cells or various number of cell assemblies. In particular, since the size or number of battery cells may be easily adjusted, the present disclosure may be advantageous in terms of expandability of the battery pack.

In addition, the present disclosure may have various other effects, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view showing a battery pack according to an embodiment of the present disclosure from which some components are separated.
FIG. 2 is an exploded perspective view schematically showing a pouch-type battery cell and a cell cover accommodated inside the battery pack according to an embodiment of the present disclosure.
FIG. 3 is an exploded perspective view schematically showing a stacked configuration of the pouch-type battery cell and the cell cover according to an embodiment of the present disclosure.
FIG. 4 is an exploded perspective view schematically showing a part of the battery pack according to an embodiment of the present disclosure.
FIG. 5 is an exploded perspective view schematically showing a part of the battery pack according to an embodiment of the present disclosure.
FIG. 6 is a combined perspective view showing the configuration of FIG. 5.
FIGS. 7 to 9 are partial perspective views schematically showing a part of the battery pack according to an embodiment of the present disclosure.
FIGS. 10 and 11 are perspective views schematically showing a cell cover and a pack case according to another embodiment of the present disclosure, respectively.
FIG. 12 is a cross-sectional view schematically showing a part of a battery pack to which the cell cover and the pack case of FIGS. 10 and 11 are applied.
FIG. 13 is a perspective view schematically showing a pack case according to still another embodiment of the present disclosure.
FIG. 14 is a cross-sectional view schematically showing a part of a battery pack to which the pack case of FIG. 13 is applied.
FIG. 15 is an exploded perspective view schematically showing cell covers according to still another various embodiments of the present disclosure.
FIG. 16 is a perspective view schematically showing a cell cover according to still another embodiment of the present disclosure.
FIG. 17 is a perspective view schematically showing a cell cover according to still another embodiment of the present disclosure.
FIG. 18 is a perspective view schematically showing that the cell cover of FIG. 17 is deformed due to gas discharge or the like.
FIG. 19 is a perspective view schematically showing a cell cover according to still another embodiment of the present disclosure.
FIG. 20 is a perspective view schematically showing that the cell cover of FIG. 19 is deformed due to gas discharge or the like.
FIG. 21 is a perspective view schematically showing a part of a battery pack according to still another embodiment of the present disclosure.
FIG. 22 is an exploded perspective view schematically showing a pouch-type battery cell and a cell cover accommodated inside a battery pack according to another embodiment of the present disclosure.
FIG. 23 is a diagram schematically showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each element or a specific portion constituting the element is exaggerated, omitted, or schematically illustrated for convenience and clarity of description. Accordingly, the size of each element does not fully reflect the actual size. If it is determined that a detailed description of a related known function or configuration may unnecessarily obscure the gist of the present disclosure, such description will be omitted.

As used herein, the term 'couple' or 'connect' includes not only a case where one member is directly coupled or directly connected to another member, but also a case where one member is indirectly coupled or indirectly connected to another member through a joint member.

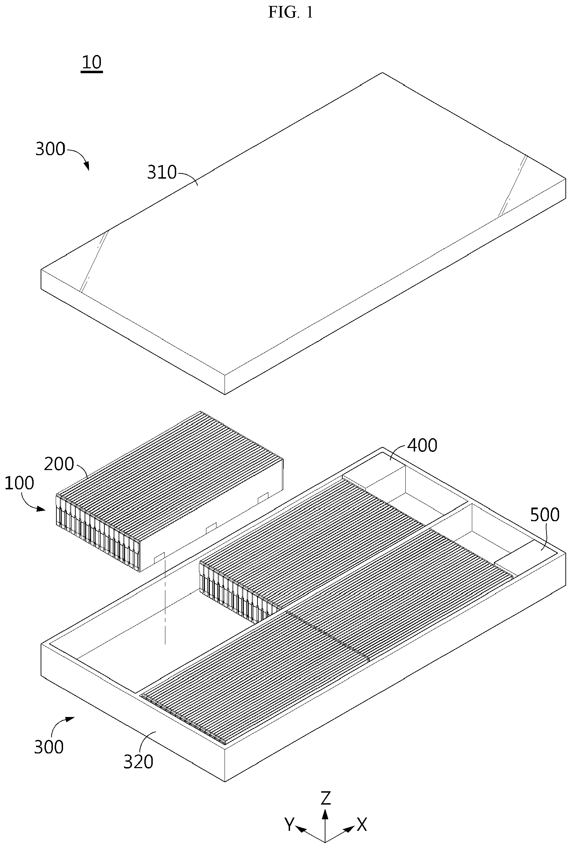

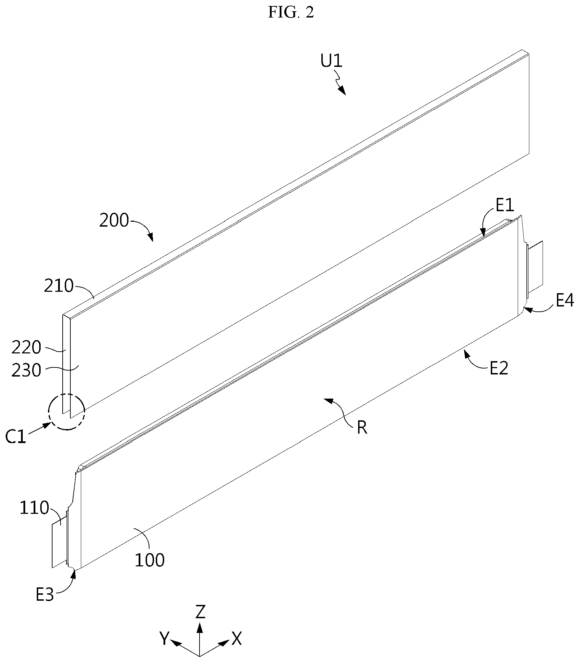

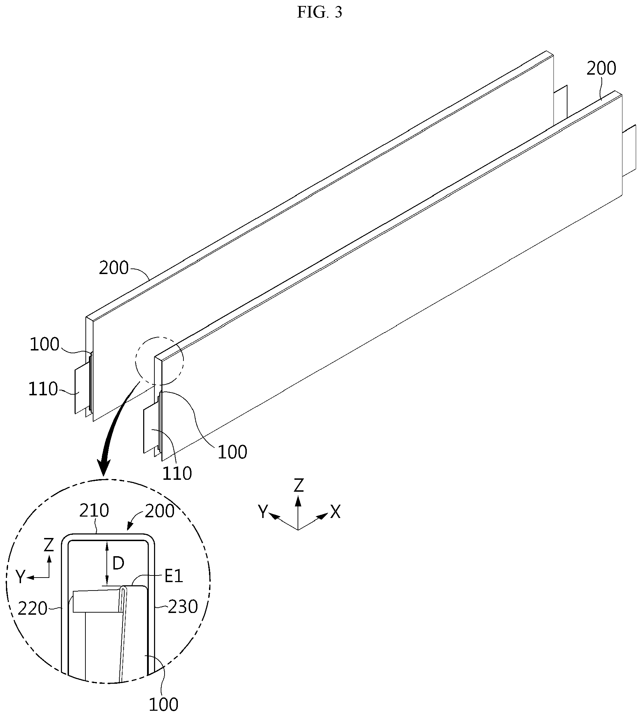

FIG. 1 is a schematic perspective view showing a battery pack according to an embodiment of the present disclosure from which some components are separated. Also, FIG. 2 is an exploded perspective view schematically showing a pouch-type battery cell and a cell cover accommodated inside the battery pack according to an embodiment of the present disclosure, and FIG. 3 is an exploded perspective view schematically showing a stacked configuration of the pouch-type battery cell and the cell cover according to an embodiment of the present disclosure.

Referring to FIGS. 1 to 3, a battery pack 10 according to an embodiment of the present disclosure includes a pouch-type battery cell 100, a pack case 300, and a cell cover 200.

The pouch-type battery cell 100 is a pouch-type secondary battery, and may include an electrode assembly, an electrolyte, and a pouch exterior. A plurality of pouch-type battery cells 100 may be included in the battery pack. In addition, the plurality of pouch-type battery cells 100 may be stacked in at least one direction. For example, referring to FIGS. 1 and 3, the plurality of pouch-type battery cells 100 may be stacked in a horizontal direction, for example in a left and right direction (Y-axis direction in the drawing). In addition, the plurality of pouch-type battery cells 100 may be arranged in a front and rear direction (X-axis direction in the drawing), as shown in FIG. 1. Moreover, the plurality of pouch-type battery cells 100 may be arranged in a horizontal direction to form a plurality of rows in the left and right direction and the horizontal direction. For example, referring to FIG. 1, the plurality of pouch-type battery cells 100 may be stacked such that two cell rows arranged in the left and right direction are provided in the front and rear direction.

The battery pack according to the present disclosure may employ various types of pouch-type battery cells 100 known at the time of filing of this application, and the configuration or the like of the pouch-type battery cell 100 will not be described in detail.

The pack case 300 has an empty space formed therein to accommodate the plurality of pouch-type battery cells 100. For example, the pack case 300 may include an upper case 310 and a lower case 320, as shown in FIG. 1. As a more specific example, the lower case 320 may be configured in a box form with an open top, so that a plurality of battery cells may be accommodated in the inner space thereof. In addition, the upper case 310 may be configured in a cover form that covers the top opening of the lower case 320. In this case, the upper case 310 may be configured in a box form with an open bottom. In addition, in the inner space of the pack case 300, the plurality of pouch-type battery cells 100 and the cell cover 200 may also be accommodated. The pack case 300 may be made of a plastic or metal material. In addition, the pack case 300 may adopt various exterior materials of the battery pack known at the time of filing of this application.

The cell cover 200 may be configured to surround the pouch-type battery cell 100 in the inner space of the pack case. That is, the cell cover 200 may be configured to surround at least some pouch-type battery cells among the plurality of pouch-type battery cells 100 included in the battery pack. Moreover, the cell cover may be provided to at least partially cover the pouch-type battery cells 100.

In addition, the cell cover 200 may be configured to support the stacking state of the plurality of pouch-type battery cells 100 inside the pack case 300 by using the structure surrounding the battery cells as described above. For example, the plurality of pouch-type battery cells 100 may be stacked in a horizontal direction (Y-axis direction in the drawing) as shown in FIGS. 1 and 3. In this case, the cell cover 200 may be configured such that the stacking state of the plurality of pouch-type battery cells 100 stacked in the horizontal direction as described above is stably maintained.

According to this embodiment of the present disclosure, without a module case, the plurality of pouch-type battery cells 100 may be directly seated and accommodated inside the pack case 200. In particular, the case of pouch-type battery cells 100 may be vulnerable to external impact and have low hardness, since its exterior is made of a soft material. Therefore, it is not easy to accommodate the pouch-type battery cells 100 inside the pack case 300 by itself without being accommodated in a module case. However, in the present disclosure, since the plurality of pouch-type battery cells 100 are coupled to the cell cover 200 in a state of being at least partially covered by the cell cover 200, the plurality of pouch-type battery cells 100 are directly accommodated inside the pack case 300, and its stacking state may be kept stable.

Moreover, in the case of the present disclosure, a CTP (Cell To Pack) type battery pack using the pouch-type battery cell 100 may be implemented more efficiently. That is, in the present disclosure, instead of accommodating the pouch-type battery cell 100 inside a separate module case and accommodating the module case inside the pack case 300, the battery pack 10 may be provided so that the pouch-type battery cell 100 is directly accommodated inside the pack case 300. At this time, at least one side of the pouch-type battery cell 100 may be exposed to the outside of the cell cover 200 and disposed to directly face the pack case 300.

Therefore, according to this embodiment of the present disclosure, the battery pack 10 need not additionally include a module case, a stacking frame, a fastening member such as a bolt for maintaining the stacking state of the cells, and the like. Accordingly, the space occupied by other components such as the module case or the stacking frame or the space for securing a tolerance may be eliminated. Therefore, since the battery cells may occupy more space as much as the removed space, the energy density of the battery pack may be further improved.

In addition, according to this embodiment of the present disclosure, since a module case, a stacking frame, bolts, or the like are not provided, the volume or weight of the battery pack may be reduced, and the manufacturing process may be simplified.

In addition, according to this embodiment of the present disclosure, the pouch-type battery cells 100 may be handled more easily. For example, when the plurality of pouch-type battery cells 100 are accommodated inside the pack case, the pouch-type battery cells 100 may be gripped by a jig or the like. In this case, the jig may grip the cell cover 200 surrounding the pouch-type battery cells 100 without directly gripping the pouch-type battery cells 100. Accordingly, it is possible to prevent the pouch-type battery cells 100 from being damaged or broken by the jig.

In addition, according to this embodiment of the present disclosure, since the cell cover 200 is coupled to the pouch-type battery cells 100, it is possible to effectively protect the pouch-type battery cells 100 without a module case.

The cell cover 200 may be made of various materials to ensure rigidity. In particular, the cell cover 200 may be made of a metal material. The metal material may more stably maintain the stacking state of the pouch-type battery cells and more safely protect the pouch-type battery cells from external impact. In particular, the cell cover 200 may include a steel material, furthermore a stainless steel (SUS) material. For example, the cell cover 200 may be entirely made of SUS material.

If the cell cover 200 is made of a steel material as above, since mechanical strength or rigidity is excellent, the stacking state of the pouch-type battery cells 100 may be more stably supported. In addition, in this case, it is possible to more effectively prevent the pouch-type battery cells 100 from being damaged or broken due to an external impact, for example by a needle-like body. In addition, in this case, the pouch-type battery cells may be handled more easily.

In addition, if the cell cover 200 is made of a steel material as in this embodiment, due to a high melting point, when a flame is generated from the battery cell 100, the overall structure may be stably maintained. In particular, since the steel material has a higher melting point than an aluminum material, the steel material may not melt even by the flame ejected from the battery cell 100 but stably maintain its shape. Accordingly, the flame propagation prevention or delay effect and the venting control effect may be excellently secured between the battery cells 100.

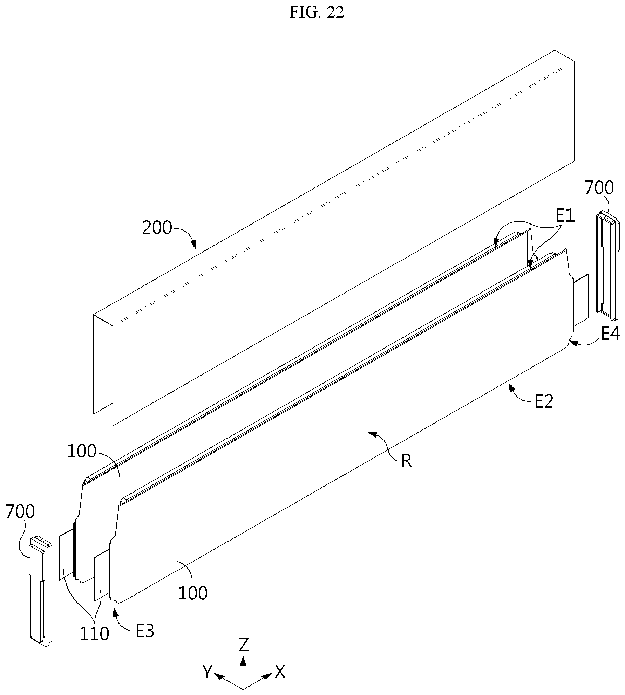

The cell cover 200 may be configured to surround one or more pouch-type battery cells 100. For example, as shown in FIGS. 2 and 3, one cell cover 200 may be configured to cover only one pouch-type battery cell 100. In this case, it may be regarded that the cell cover 200 is individually coupled to every pouch-type battery cell 100 among the plurality of pouch-type battery cells 100. Alternatively, the cell cover 200 may be configured to cover two or more pouch-type battery cells 100 together. This will be described later in more detail with reference to FIG. 22.

The cell cover 200 may be at least partially adhered to an outer surface of the battery cell 100. For example, an inner surface of the cell cover 200 may be adhered to the accommodation portion of the pouch-type battery cell 100.

One or more cell covers 200 may be included in the battery pack. In particular, the cell cover 200 may be configured to group a plurality of pouch-type battery cells 100 included in the battery pack to form a unit. In this case, it may be regarded that one cell cover 200 constitutes one cell unit. In addition, one cell unit may include one pouch-type battery cell 100 or a plurality of pouch-type battery cells 100. For example, it may be regarded that one cell unit is shown in FIG. 2, as indicated by U1, and two cell units are shown in FIG. 3. The battery pack may include a plurality of cell units, and in this case, it may be regarded that a plurality of cell covers 200 are included in the battery pack. For example, if the cell cover 200 is configured to surround one pouch-type battery cell 100, the battery pack may include the same number of cell covers 200 as the number of pouch-type battery cells 100. As another example, if the cell cover 200 is configured to surround two or more pouch-type battery cells 100, the battery pack may include a smaller number of cell covers 200 than the number of pouch-type battery cells 100.

The cell cover 200 may be configured to support the plurality of pouch-type battery cells 100 in a standing state. Each pouch-type battery cell 100, as shown in FIG. 2, has two wide surfaces, and a sealing portion or a folded portion of the pouch exterior may exist at the edge of a wide surface of the pouch-type battery cell 100. Therefore, in general, it is difficult to stack the pouch-type battery cells 100 in a standing state in the upper and lower direction. However, in the battery pack according to the present disclosure, the cell cover 200 may be configured to surround one or more pouch-type battery cells 100 and support the standing state, namely an erect state, of the surrounded pouch-type battery cell 100.

In particular, the cell cover 200 may be configured such that the plurality of pouch-type battery cells 100 may be stacked in a horizontal direction in a state of standing in the upper and lower direction. For example, as in the embodiment shown in FIGS. 1 and 3, the plurality of cell covers 200 may be stacked on each other in the horizontal direction, and each cell cover 200 may be configured to surround one or more pouch-type battery cells 100. In this case, by the cell cover 200, the configuration in which the plurality of pouch-type battery cells 100 are stacked side by side in the horizontal direction in a standing state may be stably maintained.

In particular, the cell cover 200 may be configured to stand by itself in the inner space of the pack case 300. That is, the cell cover 200 may be configured to maintain a standing state by itself without the aid of other components provided in the battery pack, such as the pack case 300 or the pouch-type battery cells 100.

For example, in the embodiment of FIG. 1, the cell cover 200 may be seated directly on the bottom surface of the lower case 320. At this time, a part of the cell cover 200, for example a lower end of the cell cover 200 indicated by C1 in FIG. 2, may be seated in direct contact with the bottom surface of the lower case 320. In addition, the cell cover 200 may be configured so that the seated state is stably maintained when its lower end is seated in this way. At this time, if the cell cover 200 is made of a metal material with excellent rigidity such as steel, in particular a SUS material, the self-standing state may be more stably maintained. Therefore, in this case, the standing state of the pouch-type battery cells 100 may be more reliably supported.

The cell cover 200 may be configured to partially surround the pouch-type battery cell so that at least one side of the surrounded pouch-type battery cell is exposed to the outside. That is, the cell cover 200 may not completely cover the pouch-type battery cell 100 as a whole, but may be configured to cover only a part thereof. In particular, the cell cover 200 may be configured such that at least one side of the pouch-type battery cell is exposed toward the pack case 300. In this aspect, the cell cover 200 may be referred to as a cell sleeve.

For example, seeing to the embodiment of FIGS. 2 and 3, the cell cover 200 may be configured to surround one pouch-type battery cell 100, and the lower portion of the surrounded pouch-type battery cell 100, namely the battery cell 100 accommodated in the inner space, may not be surrounded by the cell cover 200. Accordingly, the lower portion of the battery cell 100 may be exposed toward the pack case 300 to directly face the pack case 300. In particular, seeing the embodiment of FIG. 1, the lower portion of the battery cell 100 may be exposed toward the bottom surface of the lower case 320.

According to this embodiment of the present disclosure, the cooling performance of the battery pack may be secured more effectively. In particular, according to this embodiment, the pouch-type battery cell 100 and the pack case 300 may be in direct surface contact through the open end of the cell cover 200. That is, one side of the pouch-type battery cell 100 disposed adjacent to the open end of the cell cover 200 may directly face or contact the pack case 300. Accordingly, the heat emitted from each pouch-type battery cell 100 may be directly transferred to the pack case 300, thereby improving cooling performance. In addition, in this case, since a separate cooling structure does not need to be provided between the pouch-type battery cell 100 and the pack case 300, efficient cooling performance may be realized. Also, in this case, a space for introducing a coolant such as air may not be provided between the pouch-type battery cells 100.

Also, in this case, since at least one side of the cell cover 200 is opened, it may be advantageous to reduce the weight of the battery pack. For example, when the cell cover 200 is made of a material such as steel, if the lower end of the cell cover 200 is formed in an open shape, the weight of the cell cover 200 may be reduced as much as the weight of the lower plate. Moreover, as shown in FIG. 1, many cell covers 200 may be included in battery pack 10, and if a lower plate is not present for all cell covers 200 so that the cell covers 200 have an open form, the weight of the battery pack 10 may be significantly reduced.

In addition, according to an embodiment of the present disclosure, the configuration of a long cell having a long length in a specific direction may be more easily provided.

For example, in the case of a conventional prismatic cell, if the length in a specific direction is formed to be long, the process of inserting the electrode assembly into the prismatic case may not be easy. In particular, in the process of inserting the electrode assembly, the electrode assembly may be damaged. However, according to an embodiment of the present disclosure, the length may be easily increased in one direction with respect to the pouch-type battery cell 100 and the cell cover 200 during the process of molding the pouch exterior, manufacturing the electrode assembly, or manufacturing the cell cover 200. In addition, the process of inserting the long cell manufactured long in one direction as above through the open side (e.g., the lower side) of the cell cover 200 may be easily performed. Therefore, according to this embodiment of the present disclosure, even when the battery pack 10 is manufactured using a long cell, it is possible to secure excellent assembly, processability, productivity, and the like.

Each pouch-type battery cell 100 may include an accommodation portion indicated by R and edge portions indicated by E1 to E4, as shown in FIG. 2. Here, the accommodation portion R may be a portion in which an electrode assembly in which a positive electrode plate and a negative electrode plate are stacked with a separator interposed therebetween is accommodated. In addition, an electrolyte may be accommodated in the accommodation portion R. Also, the edge portions E1 to E4 may be arranged in the form of surrounding the accommodation portion R.

In particular, the edge portion may be a sealing portion where the pouch exterior, which is the case of the pouch-type battery cell, is sealed. For example, in the embodiment of FIG. 2, four edge portions are provided, and it may be regarded that they are located at an upper corner, a lower corner, a front corner, and a rear corner, respectively, based on the accommodation portion R. In this case, all of the four edge portions E1 to E4 may be a sealing portion. Alternatively, some of the four edge portions E1 to E4 may be configured in a folded form rather than a sealing portion. For example, in the embodiment of FIG. 2, the upper edge portion E1, the front edge portion E3, and the rear edge portion E4 are all sealing portions, but the lower edge portion E2 may be a folded portion of the pouch exterior. Here, a battery cell in which all four edge portions E1 to E4 are sealed may be referred to as a four-sided sealing cell, and a battery cell in which three edge portions E1, E3, E4 are sealed may be referred to as a three-sided sealing cell.

In this configuration, the cell cover 200 may be configured to surround both sides of the accommodation portion R of the pouch-type battery cell 100 and a part of the edge portions E1 to E4. For example, as shown in FIG. 2, when one cell cover 200 is configured to surround one pouch-type battery cell 100, the cell cover 200 may be configured to surround both surfaces of the accommodation portion R of the corresponding pouch-type battery cell 100 (e.g., the left surface and the right surface of the corresponding accommodation portion R) and a part of the edge portion of the corresponding battery cell 100 from the outside. As another example, when one cell cover 200 is configured to surround a plurality of pouch-type battery cells 100, for example a plurality of battery cells arranged in the left and right direction, the cell cover 200 may be configured to surround the outer surface of the accommodation portion of the outermost battery cell and one edge portions of all battery cells. As a more specific example, one cell cover 200 may be configured to surround three pouch-type battery cells 100 stacked in the left and right direction. In this case, the cell cover 200 may be configured to cover the left surface of the left battery cell, one edge portions of the three battery cells, and the right surface of the right battery cell.

According to this embodiment, it may be easily implemented that one cell cover 200 supports and protects one or more pouch-type battery cells 100. In addition, according to this embodiment, through the cell cover 200, the process of handling one or more pouch-type battery cells 100 may be easily and safely performed. In addition, according to this embodiment, one cell cover 200 may face the surfaces of two accommodation portion R with respect to the pouch-type battery cells 100 accommodated therein. Accordingly, the cooling performance between the accommodation portion R and the cell cover 200 may be further improved. In particular, in this case, the surface cooling is implemented through the wide surface of the accommodation portion R, so that the cooling efficiency may be improved.

Meanwhile, in the battery pack according to the present disclosure, a TIM (Thermal Interface Material) may be interposed between different components in order to increase heat transfer performance. For example, the TIM may be filled between the battery cell 100 and the cell cover 200, between the cell cover 200 and the pack case 300, and/or between the battery cell 100 and the pack case 300. In this case, the cooling performance of the battery pack, for example dual cooling performance or the like, may be further improved.

In particular, the cell cover 200 may be configured to surround an edge portion not having an electrode lead among several edge portions of the pouch-type battery cell 100 accommodated therein. For example, seeing the embodiment shown in FIG. 2, the pouch-type battery cell 100 may include two electrode leads 110, namely a positive electrode lead and a negative electrode lead. In this case, the two electrode leads may be respectively located at the front edge portion E3 and the rear edge portion E4. At this time, the cell cover may be configured to surround one of two edge portions E1, E2 other than the front edge portion E3 and the rear edge portion E4.

Referring to FIGS. 2 and 3, the pouch-type battery cell 100 may be regarded as being formed in an approximately hexahedral shape. In addition, the electrode leads 110, namely the negative electrode lead and the positive electrode lead, may be formed at two of the six surfaces, respectively. In addition, the cell cover 200 is provided to surround at least a part of three surfaces among four surfaces other than the two surfaces where the electrode lead 110 is formed in the pouch-type battery cell 100 having six surfaces.

According to this embodiment of the present disclosure, it is possible to induce the emission direction of the flame or the like toward the exposed side of the cell cover 200. For example, according to this embodiment, since the front side and the rear side of the cell cover 200 where the electrode lead 110 is located are open, it is possible to discharge the flame toward the open portion. In particular, when the cell cover 200 is configured to have open front and rear sides as described above, side directional venting may be easily implemented. Alternatively, when the lower end or the upper end of the cell cover 200 is configured in an open form, directional venting may be performed toward the open side at the lower end or the upper end of the cell cover 200.

Moreover, the cell cover 200 may be provided to cover both sides of the accommodation portion R and the upper edge portion E1 with respect to one or more pouch-type battery cells 100 accommodated and surrounded therein. For example, referring to FIG. 2, the cell cover 200 may be configured to surround all of the left and right surfaces of the accommodation portion R and the upper edge portion E1 with respect to one pouch-type battery cell 100. As another example, when the cell cover 200 is configured to surround two pouch-type battery cells 100 stacked in the left and right direction, the cell cover 200 may be configured to surround the left surface of the accommodation portion of the left battery cell, the upper edge portions E1 of the two battery cells, the right surface of the accommodation portion of the right battery cell.

According to this embodiment of the present disclosure, by using one cell cover 200, it is possible to easily implement a configuration for supporting and protecting one or more battery cells. In particular, according to the embodiment, the lower edge portion E2 may be located adjacent to the open end of the cell cover 200 to face the pack case 300 without being surrounded by the cell cover 200 and may be in in direct surface contact with the pack case 300. Accordingly, the heat of the pouch-type battery cell 100 surrounded by the cell cover 200 may be quickly and smoothly discharged toward the lower pack case 300. Accordingly, the cooling performance of the battery pack may be secured more effectively.

In particular, such a configuration may be implemented more effectively when cooling is mainly performed in the lower portion of the pack case 300. For example, since a battery pack mounted to an electric vehicle is mounted to a lower portion of a vehicle body, cooling may be mainly performed in the lower portion of the pack case 300. At this time, when the lower edge portion E2 of each pouch-type battery cell 100 is in surface contact with the pack case as in this embodiment, heat is rapidly transferred from each battery cell 100 toward the pack case, so that the cooling performance may be further improved.

In addition, according to this embodiment, when a high-temperature gas or flame is discharged from the pouch-type battery cell 100 in a situation such as thermal runaway, it is possible to effectively prevent the discharged gas or flame from being directed to the upper side. In particular, when the occupant is located at an upper side of the battery pack 10, such as in an electric vehicle, according to this embodiment, it is possible to suppress or delay that the gas or flame is directed toward the occupant.

In addition, the pack case 300 may be configured to have an inner space in a sealed shape. In particular, the pack case 300 may be configured to be directly exposed to the outside. Therefore, the pack case 300 needs to secure performance such as waterproofing and dustproofing at a certain level or more, and for this purpose, it may be configured in a sealed form. At this time, a venting hole for discharging the venting gas discharged from the cell cover 200 to the outside may be separately formed in the pack case 300.

Referring to FIGS. 2 and 3, it may be regarded that the cell cover 200 is formed in a shape similar to an n-shape. In addition, by using this shape, it may be regarded that the cell cover 200 is configured to cover portions of the pouch-type battery cell 100 accommodated therein other than the front side and the rear side where the electrode lead protrudes and the lower side. That is, the cell cover 200 may be provided to cover the outer side and the upper side of the accommodation portion of the pouch-type battery cell accommodated therein.

More specifically, as shown in FIGS. 2 and 3, the cell cover 200 may include an upper cover 210, a first side cover 220, and a second side cover 230.

Here, the upper cover 210 may be configured to surround the upper part of the upper edge portion E1 of the pouch-type battery cell 100 accommodated therein.

In particular, in the cell cover 200, the portion (cover portion) located between two side covers and the side surface of the pouch-type battery cell 100 facing the cover portion may be spaced apart from each other by a predetermined distance. In addition, the spaced region may be configured in an empty form.

For example, the upper cover 210 may be configured to be spaced apart from the upper edge portion E1 of the pouch-type battery cell 100. More specifically, referring to the partially enlarged view in the embodiment of FIG. 3, the lower surface (inner surface) of the upper cover 210 and the upper edge portion E1 disposed adjacent to the upper cover 210 may be spaced apart from each other by a predetermined distance D. In addition, at least a part of the spaced region may be configured as an empty space. Of course, in the spaced region between the edge portion of the battery cell 100 and the inner surface of the cell cover 200, a gaseous material such as air may exist. In addition, other materials may be partially interposed in the spaced region.

According to this embodiment of the present disclosure, due to the empty space formed between the side portion (edge portion) of the pouch-type battery cell 100 and the cell cover 200, a path through which the venting gas or the like moves may be provided. For example, when a venting gas is generated due to thermal runaway in the battery cell 100 accommodated in the cell cover 200, the generated venting gas may move in the front and rear direction (X-axis direction) through the empty space between the upper edge portion E1 adjacent to the upper cover 210 and the upper cover 210. Therefore, even if the configuration for discharging the venting gas to the outside of the cell cover 200, for example a perforation hole or a cut portion as explained below, is located in any part of the cell cover 200 or other components, the venting gas may move smoothly and quickly to the portion where the corresponding discharging configuration is located. Therefore, it is possible to prevent the internal pressure of the cell cover 200 from increasing and to effectively control venting by, for example, inducing the discharge direction of the venting gas.

Meanwhile, the upper cover 210 may be configured to be in contact with the upper edge portion E1 of the pouch-type battery cell 100.

In addition, the upper cover 210 may be configured in a planar shape. In this case, the upper cover 210 may have a straight cross section in the horizontal direction to surround the upper edge portion E1 of the pouch-type battery cell 100 in a straight form from the outside.

The first side cover 220 may be configured to extend in the lower direction from one end of the upper cover 210. For example, the first side cover 220 may be configured to be elongated in the lower direction (-Z-axis direction in the drawing) from the left end of the upper cover 210. Moreover, the first side cover 220 may be formed in a planar shape. In this case, the first side cover 220 may be configured to be bent from the upper cover 210.

In addition, the first side cover 220 may be configured to surround the outer side of the accommodation portion at one side of the pouch-type battery cell 100 accommodated therein. For example, when one pouch-type battery cell 100 is accommodated in the cell cover 200, the first side cover 220 may be configured to cover the left surface of the accommodation portion of the accommodated pouch-type battery cell 100 from the left side. Here, the first side cover 220 may be in direct contact with the outer surface of the accommodation portion.

The second side cover 230 may be positioned to be spaced apart from the first side cover 220 in a horizontal direction. In addition, the second side cover 230 may be configured to extend in the lower direction from the other end of the upper cover 210. For example, the second side cover 230 may be configured to be elongated in the lower direction from the right end of the upper cover 210. Moreover, the second side cover 230 may also be configured in a planar shape like the first side cover 220. At this time, it may be regarded that the second side cover 230 and the first side cover 230 are arranged parallel to each other while being spaced apart in the horizontal direction.

In addition, the second side cover 230 may be configured to surround the outer side of the accommodation portion at the other side of the pouch-type battery cell 100 accommodated therein. For example, when one pouch-type battery cell 100 is accommodated in the cell cover 200, the second side cover 230 may be configured to surround the right surface of the accommodation portion of the accommodated pouch-type battery cell 100 from the right side. Here, the second side cover 230 may be in direct contact with the outer surface of the accommodation portion.

In this embodiment, the inner space may be defined by the upper cover 210, the first side cover 220 and the second side cover 230. In addition, the cell cover 200 may accommodate one or more battery cells in the inner space defined as above.

Also, in this embodiment, the cell cover 200 may be configured such that one side is closed and the other side is opened with respect to the inner space between the first side cover 220 and the second side cover 230 that are erected in the vertical direction in parallel to each other. For example, in the space between the first side cover 220 and the second side cover 230, the upper side may be closed by the upper cover 210, and the front, rear and lower sides may form open ends. In this case, the front edge portion E3 and the rear edge portion E4 in which the electrode lead 110 is located may be disposed adjacent to the front open end and the rear open end, respectively, and the lower edge portion E2 may be disposed adjacent to the lower open end.

Also, in this embodiment, the lower ends of the first side cover 220 and the second side cover 230 as indicated by C1 in FIG. 2 may be in contact with the bottom surface of the pack case 300. In particular, the contact configuration between the lower ends of the first side cover 220 and the second side cover 230 and the pack case 300 may be formed to be elongated in the front and rear direction (X-axis direction in the drawing). According to this embodiment, the self-standing configuration of the cell cover 200 capable of maintaining the pouch-type battery cell 100 accommodated therein in an upright state may be more stably implemented.

Moreover, the first side cover 220 and the second side cover 230 may have the same height as each other. That is, the lengths of the first side cover 220 and the second side cover 230 extending in the lower direction from the upper cover 210 may be the same. In this case, the self-standing configuration of the cell cover 200 may be more easily achieved.

Meanwhile, to describe the cell cover 200 and the pouch-type battery cell 100 according to an embodiment of the present disclosure again, the upper cover 210 may face the upper edge portion E1 of the pouch-type battery cell 100, and may surround the upper edge portion E1 together with the first side cover 220 and the second side cover 230.

In addition, the cross-sectional areas of the first side cover 220 and the second side cover 230 are larger than the cross-sectional area of the pouch-type battery cell 100 facing the first side cover 220 and the second side cover 230, thereby preventing the accommodation portion R from being exposed to the outside and thus securing safety as much as possible.

In particular, the pouch-type battery cell 100 may include a sealing portion and a non-sealing portion as the edge portions E1 to E4. For example, in the embodiment of FIG. 2, the upper edge portion E1 may be a DSF (Double Side Folding) portion serving as a sealing portion of the pouch-type battery cell 100, and the lower edge portion E2 may be a non-sealing portion of the pouch-type battery cell 100.

Here, the cell cover 200 may be configured to surround the pouch-type battery cell 100 such that, among the edge portions E1 to E4, at least a part of the sealing portion is surrounded and at least a part of the non-sealing portion is not surrounded but exposed to the outside. For example, seeing the embodiment of FIG. 2, the cell cover 200 may be configured to cover the upper edge portion E1 that is a part of the sealing portion of the pouch-type battery cell 100. In this case, it may be regarded that the pouch-type battery cell 100 accommodated in the cell cover 200 is configured such that the upper edge portion E1 serving as the sealing portion faces the upper cover 210. In addition, the cell cover 200 may surround the pouch-type battery cell 100 so that the lower edge portion E2 serving as a non-sealing portion of the pouch-type battery cell 100 is exposed to the outside. In this case, it may be regarded that the lower edge portion E2 serving as a non-sealing portion of the pouch-type battery cell 100 is disposed at the open surface of the cell cover 200.

In the pouch-type battery cell 100, the upper edge portion E1 serving as a sealing portion may be more vulnerable to the discharge of relatively high-temperature gas or flame than the lower edge portion E2 serving as a non-sealing portion. However, according to this embodiment, the upper edge portion E1 serving as a sealing portion is disposed to face the upper cover 210, which may be more advantageous for directional venting.

In addition, in the pouch-type battery cell 100, the lower edge portion E2 serving as a non-sealing portion may have and a flat shape with a relatively wider cross-sectional area than the upper edge portion E1 serving as a sealing portion. The lower edge portion E2 may be disposed at the open surface of the cell cover 200 and be in direct contact with a thermal resin 326, explained later, to improve the cooling efficiency.

Furthermore, when the lower case 320 is seated on one surface of the vehicle body, the first side cover 220 and the second side cover 230 may extend from the upper cover 210 toward one surface of the vehicle body, and the upper edge portion E1 may be disposed further away from one surface of the vehicle body rather than the lower edge portion E2. That is, when the lower case 320 is seated on one surface of the vehicle body, the cell cover 200 may be configured such that its surface disposed relatively close to one surface of the vehicle body is opened.

Conversely, when the upper case 310 is seated on one surface of the vehicle body, the first side cover 220 and the second side cover 230 may extend from the upper cover 210 away from the one surface of the vehicle body, and the upper edge portion E1 may be disposed closer to one side of the vehicle body rather than the lower edge portion E2. That is, when the upper case 310 is seated on one surface of the vehicle body, the cell cover 200 may be configured such that its surface disposed relatively far from one surface of the vehicle body is opened.

That is, the arrangement of the cell cover 200 and the pouch-type battery cell 100 may be variously set according to the relationship with the vehicle body, the pack case 300, and components disposed on the vehicle body other than the pack case 300.

Meanwhile, in this embodiment, although the cell cover 200 is shown or described based on the n-shape, the cell cover 200 may be configured in other various shapes. For example, the cell cover 200 may be formed in various other shapes such as an I-shape, a U-shape, or an L-shape. In particular, when the cell cover 200 is formed in a U shape, the upper cover 210 described in this specification may be referred to as a lower cover. In addition, in this embodiment, the configuration of the upper cover 210 described in various embodiments of the present disclosure may be applied identically or similarly. For example, when a lower cover is provided in the cell cover 200 instead of the upper cover 210, the lower edge portion E2 of the pouch-type battery cell 100 may be configured to face the lower cover. In addition, the open end of the cell cover 200 may be formed at the upper side instead of the lower side, and the upper edge portion E1 of the battery cell 100 may be disposed adjacent to the upper open end. That is, in this embodiment, the upper edge portion E1 of the battery cell 100 may be exposed to the outside of the cell cover 200 toward the inner surface of the pack case 300.

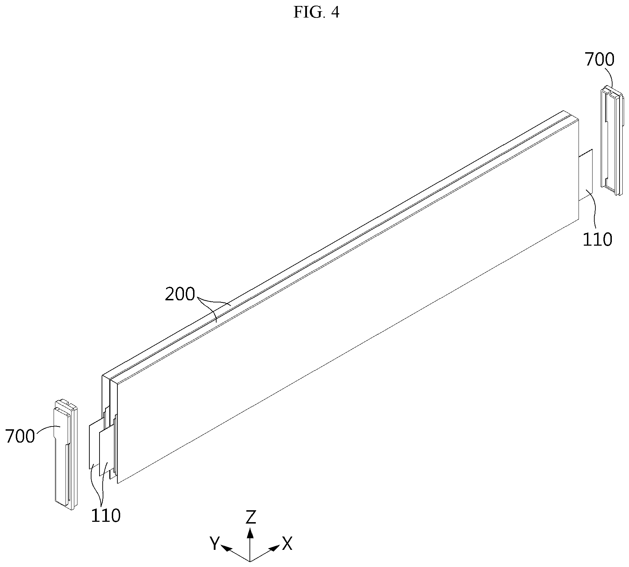

FIG. 4 is an exploded perspective view schematically showing a part of the battery pack according to an embodiment of the present disclosure.

Referring to FIG. 4, the battery pack according to the present disclosure may further include a bus bar assembly 700. Here, the bus bar assembly 700 may be configured to electrically connect a plurality of pouch-type battery cells 100 to each other. For example, as shown in FIG. 4, the bus bar assembly 700 may be coupled to the electrode leads 110 of two pouch-type battery cells 100 to electrically connect the two pouch-type battery cells 100 in series and/or in parallel. The bus bar assembly 700 may include a bus bar terminal made of an electrically conductive material such as copper or aluminum to directly contact the electrode lead 110 and a bus bar housing made of an electrically insulating material such as plastic to support the bus bar terminal.

Moreover, when the electrode leads 110 are provided at both sides of the pouch-type battery cell 100, the bus bar assembly 700 may also be provided to both sides where the electrode leads 110 are provided. For example, as shown in FIG. 4, when the electrode leads 110 protrude in both the front direction (-X-axis direction in the drawing) and the rear direction (+X-axis direction in the drawing), the bus bar assembly 700 may be located at both the front side and the rear side.

The bus bar assembly 700 may be coupled with one or more cell covers 200. For example, referring to FIG. 4, two cell covers 200 may be configured to surround different pouch-type battery cells 100, respectively, and be stacked in the horizontal direction. In this case, the bus bar assembly 700 may be coupled to the front and rear ends of the two cell covers 200, respectively. In particular, in this embodiment, one bus bar assembly 700 may be coupled to the ends of two cell covers 200. As another example, one bus bar assembly 700 may be coupled to the end of one cell cover 200. In this case, one or more pouch-type battery cells 100 may be accommodated in one cell cover 200.

The bus bar assembly 700 may be coupled with the cell cover 200 in various ways. For example, the bus bar assembly 700 may be coupled and fixed to the cell cover 200 through various fastening methods such as bonding, welding, fitting, hook-coupling, bolting, and riveting.

Meanwhile, in the former embodiment, it is described that the plurality of pouch-type battery cells 100 are made into a unit by the cell cover 200, but the plurality of pouch-type battery cells 100 may also be made into a unit by the bus bar assembly 700. For example, seeing the embodiment of FIG. 4, two pouch-type battery cells 100 and two cell covers 200 are coupled together by the same bus bar assembly 700. In this case, it may be regarded that the two pouch-type battery cells 100 and the two cell cover 200 shown in FIG. 4 are included in one cell unit. That is, it may be regarded that the configuration shown in FIG. 4 represents one cell unit.

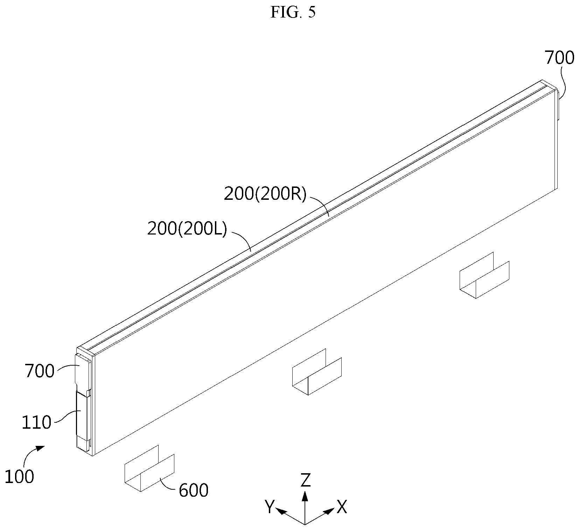

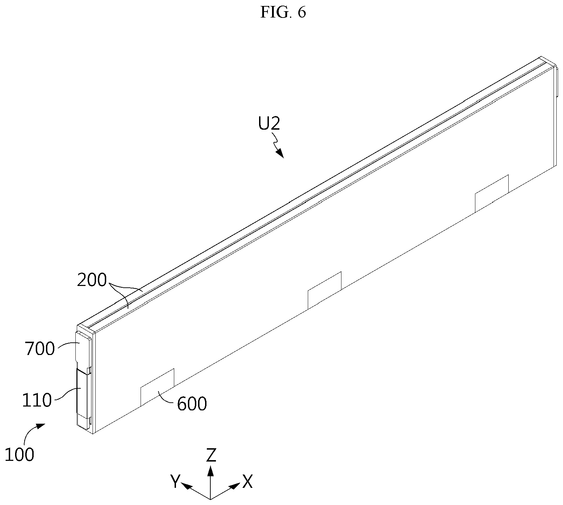

FIG. 5 is an exploded perspective view schematically showing a part of the battery pack according to an embodiment of the present disclosure, and FIG. 6 is a combined perspective view showing the configuration of FIG. 5.

Referring to FIGS. 5 and 6, the battery pack according to the present disclosure may further include a taping member 600. The taping member 600 may be configured to couple different ends of the cell cover 200 to each other. In particular, the taping member 600 may include a base layer and an adhesive layer formed on the surface of the base layer. Here, different ends of the cell cover 200 coupled by the taping member 600 may be ends of different cell covers 200 or different ends of the same cell cover 200.

For example, seeing the configuration shown in FIGS. 5 and 6, the taping member 600 may be coupled to ends of a plurality of cell covers 200. That is, a plurality of cell covers 200 may be taped together by the same taping member 600. More specifically, the taping member 600 may be coupled to lower ends of two cell covers 200 stacked in the left and right directions. In this case, the left end of the taping member 600 may be adhered to the lower end of a left cover 200L, and the right end of the taping member 600 may be adhered to the lower end of a right cover 200R. In particular, in the embodiments of FIGS. 5 and 6, the left cover 200L and the right cover 200R may include a first side cover 220 at the left side and a second side cover 220 at the right side, respectively. In this case, the left end of the taping member 600 may be adhered to a left surface of the first side cover 220 of the left cover 200L, and the right end of the taping member 600 may be adhered to a right surface of the second side cover 230 of the right cover 200R.

As another example, the taping member 600 may be coupled to an end of one cell cover 200. That is, one cell cover 200 may be taped by the same taping member 600. For example, in the embodiment shown in FIG. 2, the taping member 600 may be coupled to a lower portion of one cell cover 200. In this case, the taping member 600 may couple between different ends of one cell cover 200. In particular, in one cell cover 200, the first side cover 220 may be located at the left side and the second side cover 230 may be located at the right side. In this case, the taping member 600 may have a left end attached to the left surface of the first side cover 220 and a right end attached to the right surface of the second side cover 230.

The taping member 600 may be located at the outer side of the pouch-type battery cell 100 that is not surrounded by the cell cover 200. For example, in the embodiment of FIGS. 5 and 6, the cell cover 200 may be configured to expose the lower end of the pouch-type battery cell 100 to the outside without surrounding the same. In this case, the taping member 600 may be attached to the lower end of the cell cover 200 that does not surround the pouch-type battery cell 100 but expose the same to the outside.

In particular, the taping member 600 may be configured to couple at least one side of one cell unit. For example, in the embodiment shown in FIG. 6, two cell covers 200 may be included in one cell unit as indicated by U2. In addition, these two cell cover 200 may be coupled to each other by the same bus bar assembly 700. In this case, the taping member 600 may be attached by coupling one ends, particularly the lower ends, of the two cell covers 200. In addition, a plurality of taping members 600 may be included in one cell unit U2. For example, seeing the embodiment shown in FIGS. 5 and 6, in order to couple the lower ends of the two cell covers 200, three taping members 600 may be disposed to be spaced apart in the front and rear direction (X-axis direction in the drawing). Here, the front and rear direction may be a horizontal direction orthogonal to the stacking direction of the pouch-type battery cells 100.

According to this embodiment, it is possible to prevent the ends of the cell covers 200 from being separated in one cell unit U2. For example, when the first side cover 220 and the second side cover 230 of the cell cover 200 are taped by the taping member 600 from the bottom, it is possible to prevent the first side cover 220 and the second side cover 230 from being separated to both sides. Therefore, the accommodation state of the cell cover 200 and the pouch-type battery cell 100 inside the pack case 300 may be stably maintained. In particular, according to this embodiment, the self-standing configuration of the cell cover 200 may be stably maintained.

A plurality of cell units, each including the pouch-type battery cell 100, the cell cover 200, the bus bar assembly 700 and the taping member 600 formed as shown in FIG. 6 may be accommodated in the pack case 300 in a stacked form. For example, the plurality of cell units may be arranged to be stacked side by side in the horizontal direction in the inner space of the lower case 320, as shown in FIG. 1. In this case, the plurality of cell units may be stacked so that the surfaces of the cell covers 200 face each other. In particular, the cell covers 200 may be arranged to be stacked in the left and right direction such that the first side cover 220 and the second side cover 230 face each other. Also, the cell units may be stacked in the front and rear direction. In this case, the plurality of cell units may be stacked such that the electrode leads 110 protruding in the front and rear directions in each cell unit face each other.

According to this embodiment of the present disclosure, the space efficiency may be further improved by removing a module case of the battery module or the like.

Meanwhile, in the embodiment in which one or more taping members 600 are attached to the open side of the cell cover 200, the taping member 600 may be configured to expose a part of the open side of the cell cover 200 without covering the open side entirely. For example, as shown in FIGS. 5 and 6, when the lower surface of the cell cover 200 is opened and a plurality of taping members 600 are attached to the lower surface, an open portion in which the taping member 600 is not attached and the inner space of the cell cover 200 is exposed downwards may still exist in the lower surface of the cell cover 200. In this embodiment, the open part exposed downwards may function as a space for discharging heat and the like.

The cell cover 200 may be configured in the form of one bent plate. For example, the cell cover 200 may be configured to surround one or more pouch-type battery cells 100 by bending both ends of one plate in the same direction. In particular, as shown in FIG. 2, when the upper cover 210, the first side cover 220 and the second side cover 230 are provided in one cell cover 200, the upper cover 210, the first side cover 220 and the second side cover 230 may be made of one plate. In this case, it may be regarded that several components of the cell cover 200 are manufactured integrally.

Here, each component may be distinguished through a bent portion. In particular, two bent portions may be formed in one plate. In addition, based on these two bent portions, the upper cover 210, the first side cover 220 and the second side cover 230 may be distinguished. In particular, the central portion of one plate may form the upper cover 210, and both sides of the plate may be bent or folded in the lower direction based on the upper cover 210 to form the first side cover 220 and the second side cover 230. The configuration of forming a bent portion at one plate to configure the cell cover 200 may be implemented in various ways, such as pressing or rolling.

According to this embodiment of the present disclosure, the cell cover 200 may be manufactured simpler. Accordingly, the manufacturing cost or time for the battery pack may be reduced. In addition, according to this embodiment, the mechanical strength or rigidity of the cell cover 200 may be secured higher. Moreover, in this case, the heat conduction performance through the cell cover 200 may be further improved, so that the cooling performance may be further improved.

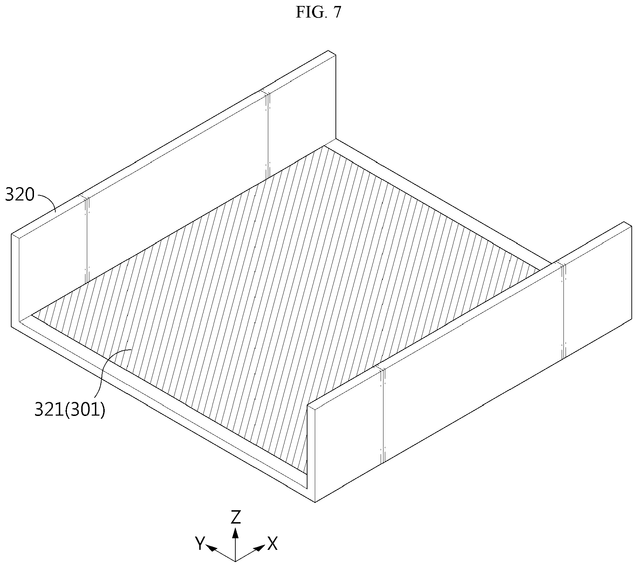

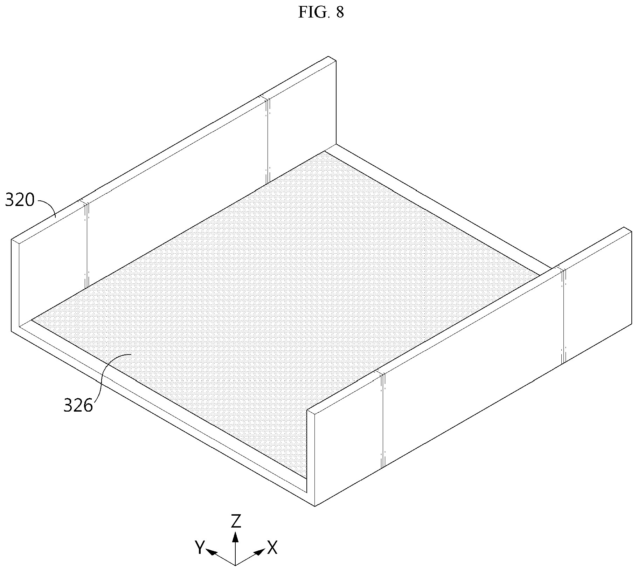

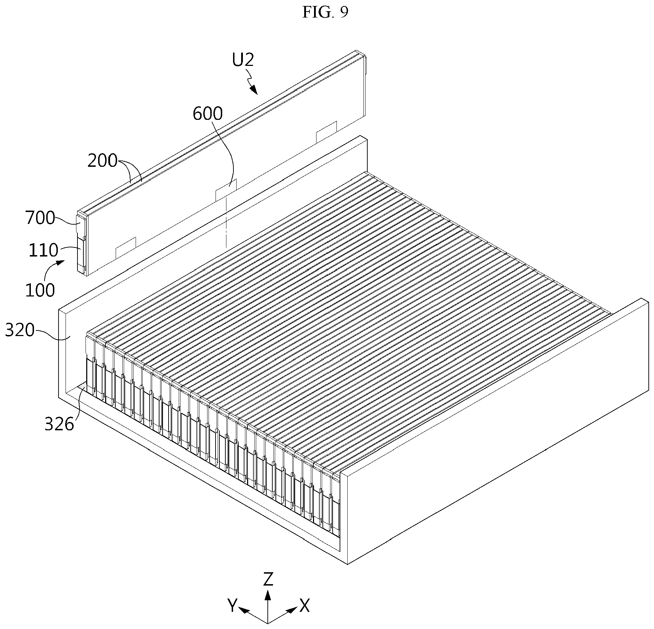

FIGS. 7 to 9 are partial perspective views schematically showing a part of the battery pack according to an embodiment of the present disclosure. More specifically, FIG. 7 is a diagram showing that a heatsink 301 is provided to the lower case 320 of the battery pack, and FIG. 8 is a diagram showing that a thermal resin 326 is applied to the heatsink 301 of FIG. 7. In addition, FIG. 9 is a perspective view schematically showing that a plurality of cell units of FIG. 6 are stacked in the inner space of the lower case 320 of FIG. 8.

First, referring to FIG. 7, the pack case 300 may include a heatsink 301. In addition, the plurality of pouch-type battery cells 100 to which the cell cover 200 is coupled may be thermally coupled to the heatsink 301. For example, as shown in FIG. 7, the lower case 320 of the pack case 300 may include a lower heatsink 321. In addition, as shown in FIG. 9, a plurality of cell units U2 may be directly seated on the upper surface of the lower heatsink 321. In particular, the cell cover 200 and the pouch-type battery cell 100 provided to each cell unit U2 may be seated with the lower ends thereof being in direct contact with the upper portion of the lower heatsink 321 in a state of standing in the upper and lower direction.

In this embodiment, a thermal resin may be interposed between the heatsink 301 and the plurality of pouch-type battery cells 100. For example, referring to FIG. 8, a thermal resin 326 may be applied to the upper surface of the lower heatsink 321. In addition, as shown in FIG. 9, a plurality of cell units U2, namely a plurality of pouch-type battery cells 100 and a plurality of cell covers 200, may be seated on the upper surface of the lower heatsink 321 to which the thermal resin 326 is applied as above.

Here, the thermal resin 326 may be made of a material that conducts heat and has an adhesive property. The thermal resin 326 may transfer heat to the heatsink 301 so that the heat generated at the pouch-type battery cell 100 is dissipated through the heatsink 301. Moreover, since the thermal resin 326 has an adhesive property, the thermal resin 326 may mechanically couple the cell cover 200 and/or the pouch-type battery cell 100 to the heatsink 301.

In this embodiment, the plurality of pouch-type battery cells 100 to which the cell cover 200 is coupled may be directly seated on the upper surface of the lower heatsink 321 to which the thermal resin 326 is applied, as in FIG. 9. In this case, a plurality of cell units U2 may be stably coupled and fixed to the upper surface of the lower heatsink 321 by the thermal resin 326. In particular, the pouch-type battery cell 100 and cell cover 200 included in each cell unit U2 may be formed such that its length in the upper and lower direction (Z-axis direction) is longer than the width in the left and right direction (Y-axis direction). Therefore, it may be regarded that the pouch-type battery cell 100 and the cell cover 200 are seated in a standing state, namely in an upright state, on the upper surface of the lower heatsink 321. At this time, the thermal resin 326 may allow the standing state of the pouch-type battery cell 100 and the cell cover 200 to be maintained more stable.

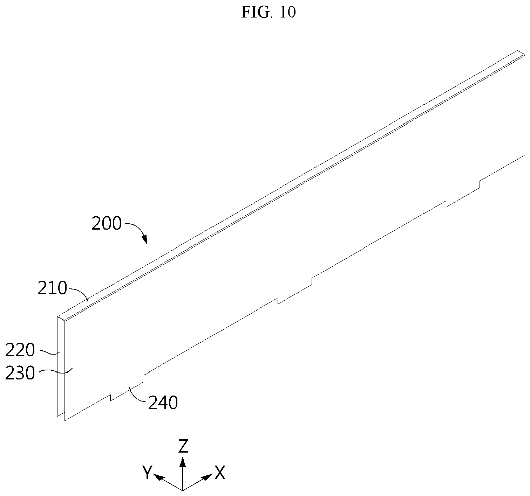

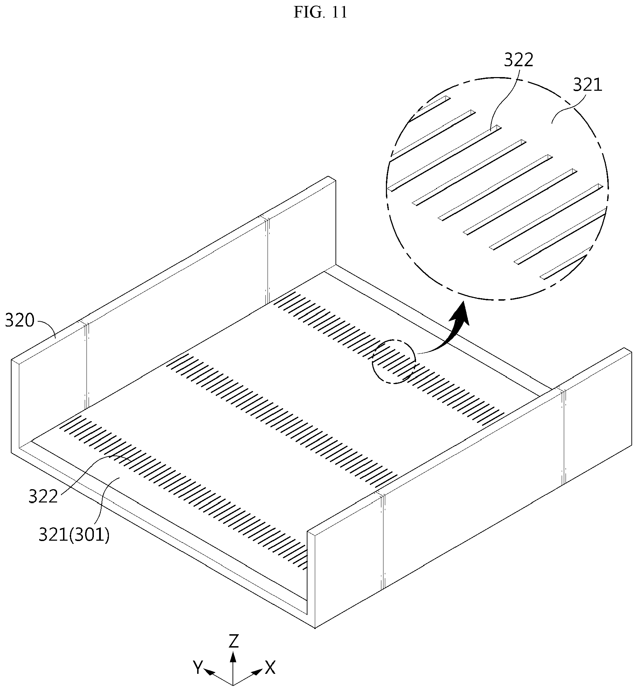

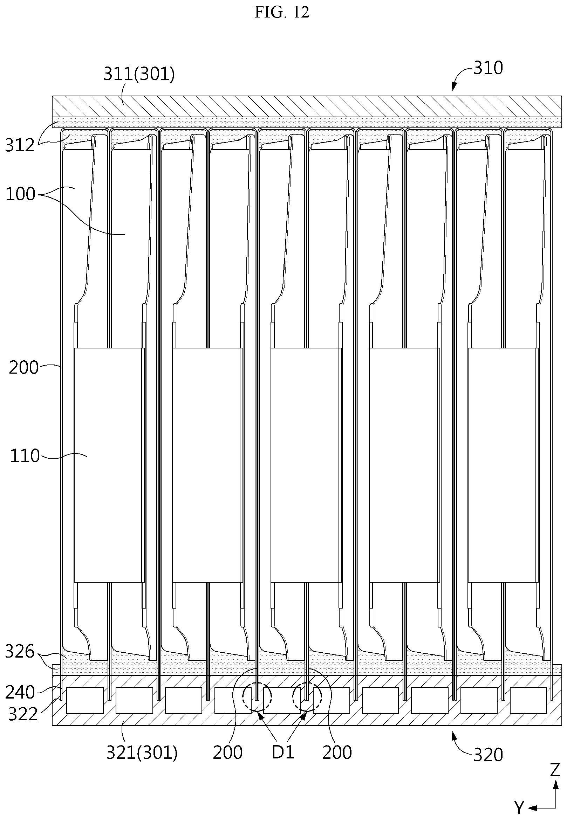

FIGS. 10 and 11 are perspective views schematically showing a cell cover 200 and a pack case 300 according to another embodiment of the present disclosure, respectively. Also, FIG. 12 is a cross-sectional view schematically showing a part of a battery pack to which the cell cover and the pack case of FIGS. 10 and 11 are applied. For several embodiments included in this specification, including this embodiment, features identical or similar to those of other embodiments will not be described in detail, and features with differences will be described in detail.

Referring to FIGS. 10 to 12, the cell cover 200 may be configured such that at least one end thereof is fitted to the pack case 300. More specifically, as indicated by D1 in FIG. 12, the lower end of each cell cover 200 may be partially fitted into the lower case 320, thereby being fastened and fixed thereto.

In particular, as shown in FIG. 10, the cell cover 200 may have a protrusion 240 formed on the lower end thereof. The protrusion 240 may be shaped to extend relatively longer in the lower direction from the lower end of the cell cover 200.

Moreover, the protrusion 240 may be provided in plural. For example, in the embodiment shown in FIG. 10, the protrusions 240 may be provided to the first side cover 220 and the second side cover 230, respectively. In addition, a plurality of protrusions 240 may be provided to each side cover. For example, as shown in FIG. 10, a plurality of protrusions 240, for example three protrusions 240, may be provided at the lower end of the second side cover 230 along the front and rear direction.

In the embodiment in which the cell cover 200 as configured above is provided, the pack case 300 may have a coupling groove 322 configured to allow the protrusion 240 to be inserted as shown in FIG. 11. Here, the coupling groove 322 may be formed in a position and shape corresponding to the protrusion 240. For example, referring to the embodiment of FIG. 11, the coupling groove 322 may be formed in a position and shape corresponding to the protrusion 240 of the cell cover at the bottom surface of the lower case 320 on which the cell cover 200 is seated. Moreover, one or more protrusions 240 may be fitted in one coupling groove 322. For example, two protrusions 240 may be inserted into the coupling groove 322 of the central portion such as the portion indicated by D1 in FIG. 12. Meanwhile, in the pack case 300, one protrusion 240 may be inserted into the coupling groove 322 located at the outermost side in the stacking direction of the cell cover 200. For example, in the configuration of FIG. 12, one protrusion 240 may be inserted into each of the coupling grooves 322 positioned at the leftmost and rightmost sides among the plurality of coupling grooves 322 arranged in the left and right direction.

Meanwhile, the pack case 300 may include a heatsink 301. In addition, the cell cover 200 may be seated on and coupled to the heatsink 301. Accordingly, the coupling groove 322 of the pack case may be formed at the heatsink 301. For example, as shown in FIGS. 11 and 12, a plurality of coupling grooves 322 may be formed at the lower heatsink 321, and the lower protrusions 240 of the cell cover 200 may be inserted into the coupling grooves 322.

According to this embodiment configuration of the present disclosure, the coupling between the cell cover 200 and the pack case 300 may be further improved. Therefore, even in a situation whether vibration or shock is applied to the battery pack or swelling occurs at the pouch-type battery cell 100, the stacking state of the cell cover 200 and the pouch-type battery cell 100 accommodated therein may be stably maintained. Moreover, according to this embodiment, it is possible to prevent the cell cover 200 from moving in the front and rear direction (X-axis direction). In addition, according to this embodiment, it is possible to prevent the cell cover 200 from moving in the left and right direction (Y-axis direction), and effectively prevent the first side cover 220 and the second side cover 230 from being separated.

Moreover, in this embodiment, a thermal resin 326 may be applied to the top surface of the heatsink 301, for example the lower heatsink 321. At this time, the thermal resin 326 may be introduced into the coupling groove 322 of the lower heatsink 321 to further increase the coupling force between the protrusion 240 of the cell cover 200 and the lower heatsink 321.

In addition, according to this embodiment, through the fitting configuration between the cell cover 200 and the pack case 300, the assembly position of the cell cover 200 inside the pack case 300 may be guided. Accordingly, in this case, the assembling property of the battery pack may be further improved.

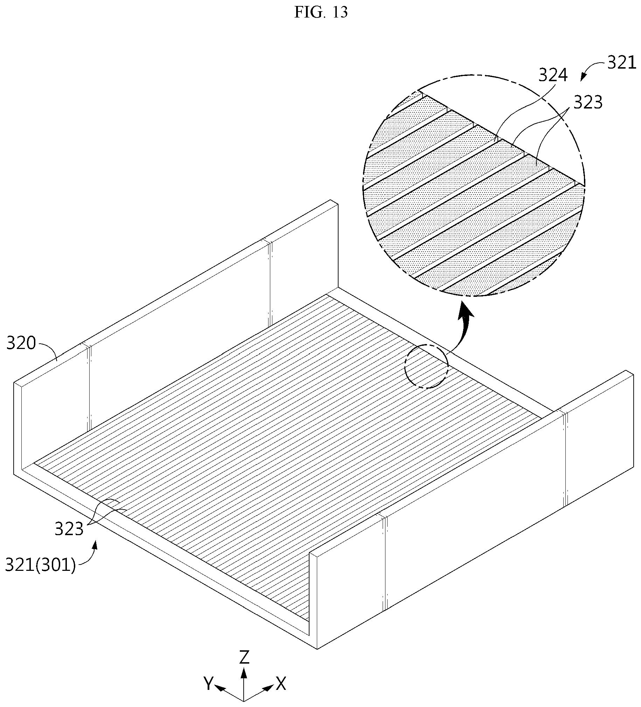

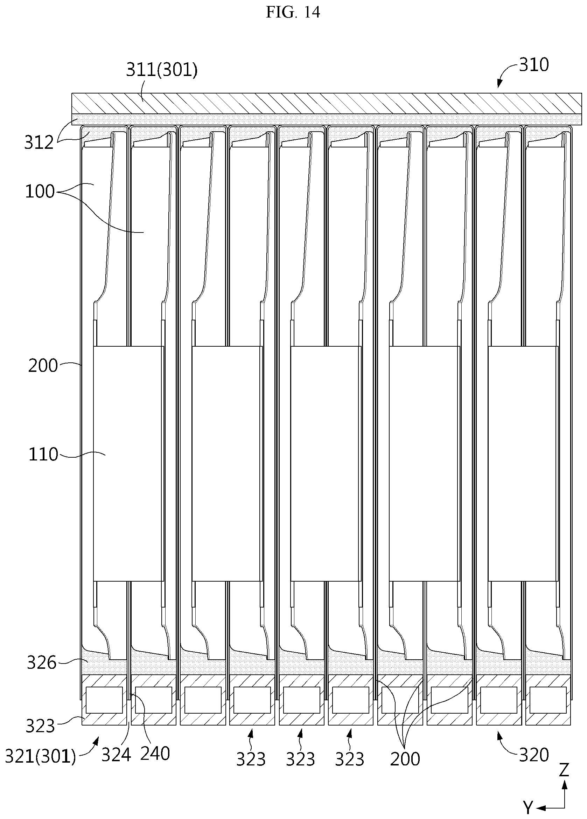

FIG. 13 is a perspective view schematically showing a pack case 300 according to still another embodiment of the present disclosure. Also, FIG. 14 is a cross-sectional view schematically showing a part of a battery pack to which the pack case 300 of FIG. 13 is applied.

Referring to FIG. 13, the heatsink 301, for example the lower heatsink 321, may include a plurality of unit heatsinks 323. Here, the plurality of unit heatsinks 323 may be installed at the pack case 300, for example the lower case 320, in a state of being spaced apart from each other to have a predetermined interval 324.

In particular, the plurality of unit heatsinks 323 may be arranged along the stacking direction of the plurality of pouch-type battery cells 100. For example, seeing the embodiment shown in FIGS. 13 and 14, the plurality of pouch-type battery cells 100 may be stacked in the left and right direction (Y-axis direction). In this case, the plurality of unit heatsinks 323 may be arranged in the left and right direction in a state of being spaced apart from each other by a predetermined interval 324.

Meanwhile, in the embodiment of FIG. 14, the plurality of unit heatsinks 323 may be mounted to the same main body case. For example, although not shown in FIG. 14, the lower case 320 may include a bottom plate on which the plurality of unit heatsinks 323 is seated, under the plurality of unit heatsinks 323.

According to this embodiment of the present disclosure, it is possible to prevent heat from propagating through the heatsink 301. That is, when heat is generated from some pouch-type battery cells 100 and is transferred to the unit heatsinks 323 corresponding thereto, since the unit heatsinks 323 are spaced apart from each other, it is possible to prevent the heat from being transferred to other unit heatsinks 323. Accordingly, the problem such as thermal runaway propagation between the battery cells 100 may be prevented more effectively.

Moreover, although not clearly shown in FIG. 14, the plurality of cell covers 200 may be spaced apart from each other. Alternatively, a heat insulating pad or a flame suppression pad may be interposed between at least a part of the plurality of cell covers 200.

In this embodiment, the end of the cell cover 200 may be configured to be interposed in a separated space between the plurality of unit heatsinks 323. For example, as in the embodiment of FIG. 10, when the protrusion 240 is formed at the lower side of the cell cover 200, the protrusion 240 of the cell cover 200 may be coupled to the interval 324 between the plurality of unit heatsinks 323, namely the separated space, as shown in FIG. 14. As another example, even if the protrusion 240 is not provided to the cell cover 200, the lower end of the cell cover 200 as indicated by C1 in FIG. 2 may be fitted into the interval 324 between the unit heatsink 323, to be elongated in the front and rear direction.

According to the embodiment in which a part of the cell cover 200 is fitted into the separated space between the plurality of unit heatsinks 323 as above, the coupling force between the pack case 300 having the unit heatsinks 323 and the cell cover 200 may be stably secured.

Also, in this embodiment, a thermal resin 326 may be applied to the heatsink 301. At this time, the thermal resin 326 may be introduced into the interval 324 between the plurality of unit heatsinks 323. Accordingly, the coupling force between the cell cover 200 and the heatsink 301 may be further increased.

As shown in FIGS. 12 and 14, the heatsink 301 may include two heatsinks, in particular an upper heatsink 311 and a lower heatsink 321. Here, the upper heatsink 311 may be disposed on the cell cover 200. Moreover, the upper heatsink 311 may be positioned on the upper cover 210 of the cell cover 200 to directly or indirectly contact the upper cover 210. In addition, the lower heatsink 321 may be disposed under the cell cover 200. Moreover, the lower heatsink 321 may be in contact with the lower end of the cell cover 200. Here, the thermal resin 312 may be interposed between the cell cover 200 and the upper heatsink 311 and/or between the cell cover 200 and the pouch-type battery cell 100 to be coupled to each other. In addition, the thermal resin 326 may be interposed between the pouch-type battery cell 100 and the lower heatsink 321 to couple them together.

According to this embodiment, the cooling performance of the battery pack may be further improved. In particular, in this embodiment, the heat generated from the pouch-type battery cell 100 may be moved to the upper side and the lower side, namely toward the upper heatsink 311 and the lower heatsink 321, and discharged. Accordingly, in this case, dual cooling of the battery pack may be easily implemented.

Meanwhile, in the various embodiments described above with respect to the thermal resin, the pack case 300 including a heatsink 301 is described mainly, but the thermal resin may also be applied even in the configuration of the pack case 300 without the heatsink 301. In this case, the thermal resin may be regarded as being provided on the inner surface of the pack case 300. For example, the thermal resin may be applied to the bottom surface of the pack case 300 on which the cell unit is placed, thereby coupling the lower end of the cell unit and the bottom surface of the pack case 300 with each other. In addition, the thermal resin may couple the edge portion of the pouch-type battery cell 100 and the end of the cell cover 200 with each other inside the cell unit.

The battery pack 10 according to the present disclosure may further include a battery management system 400 as shown in FIG. 1. The battery management system (BMS) 400 is mounted in the inner space of the pack case 300, and may be configured to control charging/discharging operation or data transmission/reception operation of the pouch-type battery cell 100 as a whole. The battery management system 400 may be provided in a pack unit, rather than a module unit. More specifically, the battery management system 400 may be provided to control the charging/discharging state, the power state, the performance state, or the like of the pouch-type battery cell 100 through a pack voltage and a pack current. The battery management system is widely known at the time of filing of this application and thus will not be described in detail here.

The battery pack 10 according to the present disclosure may further include a battery disconnect unit, as shown in FIG. 1. The battery disconnect unit (BDU) 500 may be configured to control electrical connection of the battery cells in order to manage power capacity and functions of the battery pack 10. To this end, the battery disconnect unit 500 may include a power relay, a current sensor, a fuse, and the like. The battery disconnect unit 500 is also provided in a pack unit, rather than a module unit, and various disconnection units known at the time of filing of this application may be employed.

In addition, the battery pack 10 according to the present disclosure may further include various components of a battery pack known at the time of filing of this application. For example, the battery pack 10 according to an embodiment of the present disclosure may further include a manual service disconnector (MSD) capable of shutting off power by an operator manually disconnecting a service plug.

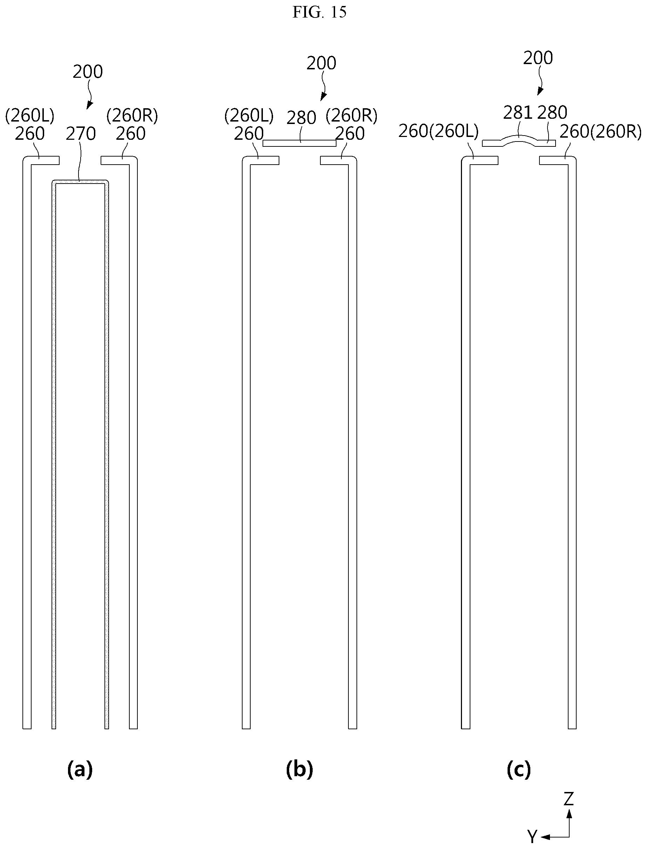

Meanwhile, in the former embodiment, it is described that the cell cover 200 has an approximately n-shape and has an integrally manufactured form, but the present disclosure is not necessarily limited to this embodiment. That is, the cell cover 200 may be manufactured in various other forms or methods. This will be described in more detail with reference to FIG. 15.

FIG. 15 is an exploded perspective view schematically showing cell covers 200 according to still another various embodiments of the present disclosure.

First, referring to FIG. 15(a), the cell cover 200 may include two unit members 260. Here, each unit member 260 may be formed in an L-shape. The unit member 260 may be referred to as an L pin, in view of its shape characteristic. In particular, the two unit members 260 may be configured such that the upper ends thereof are bent in opposite directions toward each other. That is, the upper end of the left L pin 260L may be bent in the right direction, and the upper end of the right L pin 260R may be bent in the left direction. In addition, the two L-shaped unit members 260L, 260R may be coupled with each other to form an n-shaped cell cover 200 as shown in FIG. 2. In this embodiment, it may be regarded that the left L pin 260L constitutes the left and first side cover 220 of the upper cover 210, and the right L pin 260R constitutes the right and second side cover 230 of the upper cover 210.

In addition, as shown in FIG. 15(a), the cell cover 200 may further include an insulation member 270. The insulation member 270 is made of an electrically insulating material and may be provided to the inner surface of the cell cover 200 in which the pouch-type battery cell 100 is accommodated. In particular, the insulation member 270 may have an adhesive layer on at least one side thereof and be adhered to the inner surface of the cell cover 200. Moreover, when the two L pins 260L, 260R are coupled with each other to form one cell cover 200, the insulation member 270 may support or reinforce the coupling force between the two L pins 260L, 260R. In addition, the insulation member 270 may be made of a material having heat resistance. For example, the insulation member 270 may be configured in the form of a heat-resistant tape in which an adhesive is applied to the surface of a ceramic sheet having heat resistance.

According to this embodiment of the present disclosure, since one plate only needs to be bent once, the configuration of providing the cell cover 200 in an n-shape to surround the pouch-type battery cell 100 may be more easily achieved. In particular, according to this embodiment, in order to form the cell cover 200, there is no need to perform a deep pressing process or the like to a plate made of a material with high strength such as steel. In addition, according to this embodiment, the spring-back and flatness of the cell cover 200 may be excellently achieved. In addition, according to this embodiment, it is possible to make the cell cover 200 more resistant to heat or flame.

Next, referring to FIG. 15(b), the cell cover 200 may further include an upper plate 280 in addition to the two unit members 260 formed in an L-shape. Moreover, the upper plate 280 may be formed in a flat shape, and may be configured to be padded on top of the upper bent portions of the two L pins 260L, 260R. In addition, both ends of the upper plate 280 may be respectively joined to the two L pins 260L, 260R to couple them to each other. Here, the upper plate 280 may form all or a part of the upper cover 210 of the n-shaped cell cover 200 described above with reference to FIG. 2.

According to this embodiment, the flatness of the cell cover 200 may be excellent. In particular, in this embodiment, since the upper plate 280 is located on the upper portion of the cell cover 200 in a flat shape, the flatness of the part corresponding to the upper cover 210 may be higher. Accordingly, the volume of the battery pack may be reduced, the energy density may be increased, and the cooling performance at the upper side may be further improved.

In addition, referring to FIG. 15(c), the cell cover 200 may include two unit members 260 formed in an L-shape similar to the embodiment of FIG. 15(b) and an upper plate 280. However, in FIG. 15(c), unlike the embodiment of FIG. 15(b), the upper plate 280 may have a convex portion 281. In particular, the convex portion 281 may have a shape protruding from the upper plate 280 in the upper direction (+Z-axis direction).

According to this embodiment, it is possible to effectively respond to the occurrence of swelling in the pouch-type battery cell 100. For example, when swelling occurs at the pouch-type battery cell 100 accommodated in the accommodation space inside the cell cover 200 configured as shown in FIG. 15(c), the distance between the left L pin 260L and the right L pin 260R is at least partially increased. At this time, the convex portion 281 of the upper plate 280 may be stretched or its convexity may be reduced. Accordingly, the stress generated at the cell cover 200, particularly the upper end thereof, may be reduced.

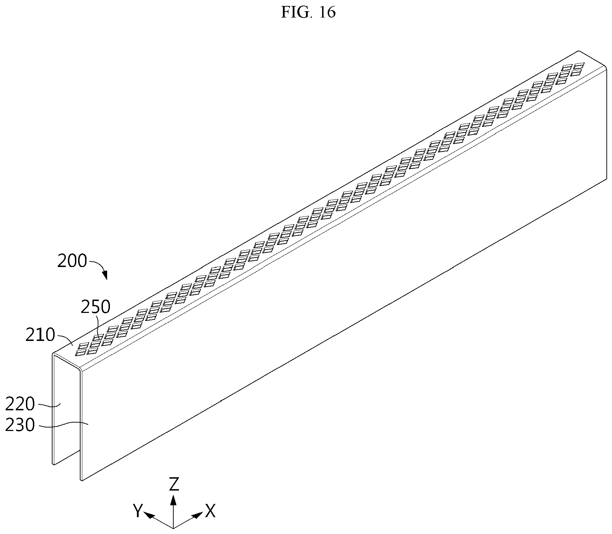

FIG. 16 is a perspective view schematically showing a cell cover 200 according to still another embodiment of the present disclosure.

First, referring to FIG. 16, in the cell cover 200, a perforation hole 250 may be formed. The perforation hole 250 may be configured to discharge a flame or gas generated in the pouch-type battery cell 100 surrounded by the cell cover 200. The perforation hole 250 may be formed at various positions of the cell cover 200. For example, the perforation hole 250 may be formed in the upper cover 210 as shown in FIG. 16. In addition, the perforation hole 250 may be formed in various shapes in the cell cover 200. For example, the perforation hole 250 may be formed in a diamond or rhombus shape, as shown in FIG. 16. However, the perforation hole 250 may be formed in other various shapes, for example a rectangular or circular shape.

In addition, a plurality of perforation holes 250 may be formed in one cell cover 200. For example, the plurality of perforation holes 250 may be respectively arranged in the left and right direction and the front and rear direction in the upper cover 210. In addition, the perforation holes 250 may be formed in a grid or mesh shape.

In particular, the perforation hole 250 of the cell cover 200 may be configured to be widened when swelling occurs at the pouch-type battery cell 100. For example, in the embodiment of FIG. 16, when the pouch-type battery cell 100 accommodated in the cell cover 200 swells, the first side cover 220 and the second side cover 230 may receive a force in a direction to be spaced apart from each other. In this case, when one or more perforation holes 250 formed in the upper cover 210 are configured to be widened, the stress applied to the cell cover 200 may be reduced.

According to this embodiment of the present disclosure, through the perforation hole 250, a flame and gas discharge effect and a swelling response effect may be achieved together. Also, according to this embodiment, when flame and gas are discharged through the perforation hole 250, the discharge direction may be controlled. Moreover, when the perforation hole 250 is formed in the upper cover 210 as in this embodiment, the gas or flame may be discharged toward the upper side, rather than toward other pouch-type battery cells 100 stacked in the horizontal direction. Accordingly, propagation of gas or flame between the cells may be further prevented.

Moreover, in the above embodiment, the perforation hole 250 of the cell cover 200 may be configured to be opened when the battery cell 100 swells. That is, the perforation hole 250 may be normally closed, but may be configured to be opened by the pressure applied to the cell cover 200 when the battery cell 100 swells.

According to this embodiment of the present disclosure, since the perforation hole 250 of the cell cover 200 is closed in a normal state of the battery cell 100, the protective effect of the battery cell 100 by the cell cover 200 may be stably secured. For example, since the perforation hole 250 of the cell cover 200 is closed in a normal state, it is possible to prevent foreign substances such as water or dust from entering the inside of the cell cover 200. In addition, if the battery cell 100 swells, it may be regarded that there is a possibility that a venting gas is ejected from the battery cell 100 due to thermal runaway. Therefore, only when such swelling occurs, the perforation hole 250 of the cell cover 200 is formed, so that it is prepared to discharge the venting gas. In addition, through this preparation, when the venting gas is ejected from the battery cell 100, the venting gas may be quickly discharged to the outside of the cell cover 200.

In addition, when a fire-extinguishing agent is present on the upper part of the cell cover 200 or the upper part of the battery pack 10, the venting configuration in the upper direction may be more effective in suppressing fire. For example, when a fire-extinguishing tank containing the fire-extinguishing agent is disposed on the upper part of the cell cover 200, if a flame or gas is discharged to the upper part of the cell cover 200, the fire-extinguishing agent may be discharged from the fire-extinguishing tank to prevent or delay the fire.

Meanwhile, when the perforation hole 250 is formed in the cell cover 200 as shown in FIG. 16, the thermal resin 312 may be interposed between the cell cover 200 and the pouch-type battery cell 100 as shown in FIGS. 12 and 14. In this case, it is possible to supplement the safety deterioration problem, such as the exposure of the pouch-type battery cell 100 to the outside through the perforation hole 250.

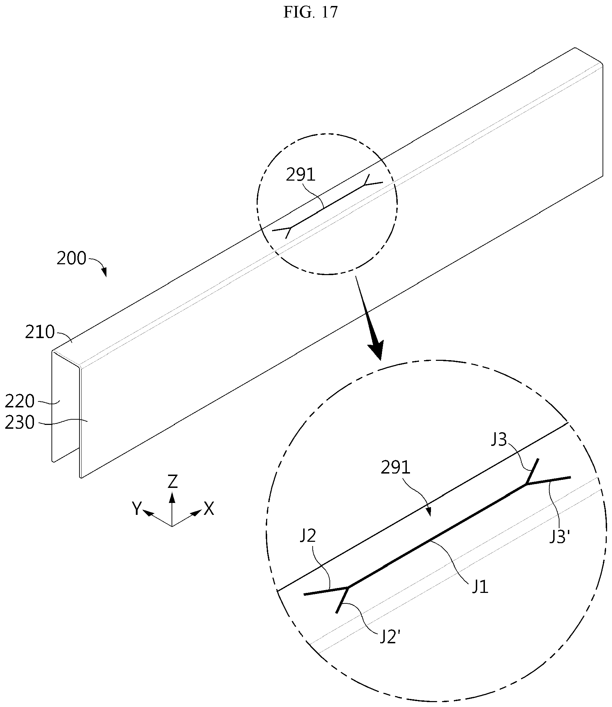

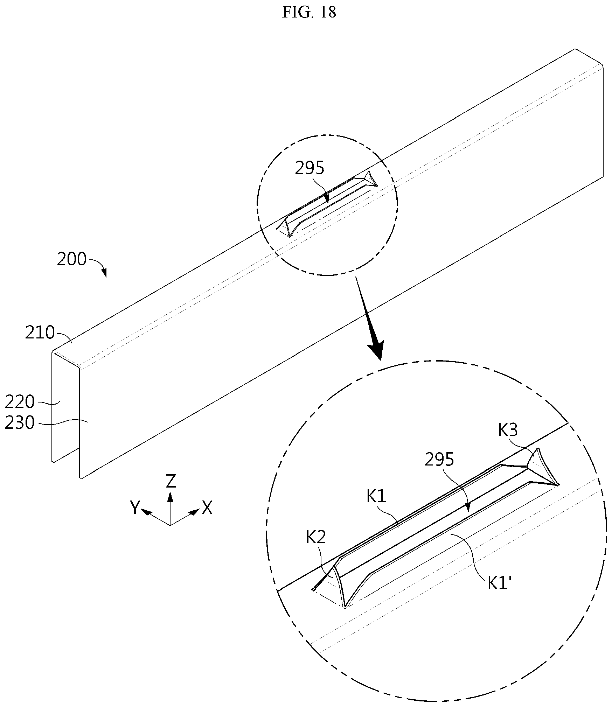

FIG. 17 is a perspective view schematically showing a cell cover 200 according to still another embodiment of the present disclosure. Also, FIG. 18 is a perspective view schematically showing that the cell cover 200 of FIG. 17 is deformed due to gas discharge or the like.

First, referring to FIG. 17, the cell cover 200 may have a cut portion 291. The cut portion 291 may be configured to discharge a flame or gas generated in the pouch-type battery cell 100. In particular, the cut portion 291 may be formed in the form of cutting a portion of the cell cover 200 with a sharp object such as a knife. For example, the cut portion 291 may be provided in such a way that a knife cuts through the cell cover 200 in a linear fashion. The cut portion 291 may be replaced with a term such as a slit. Alternatively, the cut portion 291 may be provided to form a notch without completely perforating the cell cover 200.

The cut portion 291 may be formed in a substantially straight shape along the horizontal extension direction of the cell cover 200, and its end in the extension direction may be branched.

For example, referring to FIG. 17, the cut portion 291 may include a center cut line J1 elongated along the front and rear direction (X-axis direction) that is the longitudinal directions of the cell cover 200, and branch cut lines J2, J2', J3, J3' respectively branched at both ends of the center cut line J1. More specifically, at the front end of the center cut line J1, two front cut lines J2 and J2' may be formed in a branched form while forming a predetermined angle with the center cut line J1. In addition, at the rear end of the center cut line J1, two rear cut lines J3, J3' may be provided in a branched form while forming a predetermined angle with the center cut line J1. In particular, the front cut lines J2, J2' or the rear cut lines J3, J3' may be formed to have a right angle or an obtuse angle with the center cut line J1.

In addition, when gas or flame is discharged from the pouch-type battery cell 100 accommodated in the cell cover 200, the cell cover 200 may be deformed as shown in FIG. 18.

Of course, the modified forms of FIGS. 17 and 18 are only examples, and the cell cover 200 may be modified into various other forms according to the shape of the cut portion 291 or the discharge pressure of gas or flame.

More specifically, in a state where the cut portion 291 is formed on the cell cover 200 as shown in FIG. 17, if a flame or gas is generated in the battery cell 100 due to thermal runaway of the battery cell 100, the pressure inside the battery cell 100 may increase. In addition, if the internal pressure increase reaches a certain level or above, as shown in FIG. 18, the cut portion 291 is widened, and the flame or gas may be discharged through the widened area 295 of the cut portion 291.

According to this embodiment, when gas or flame occurs, it is possible to smoothly discharge the gas or flame to the outside without exposing the battery cell 100 accommodated in the cell cover 200 to the outside.

The cut portion 291 may be formed at various parts of the cell cover 200, for example at the upper side of the cell cover 200 as shown in FIGS. 17 and 18. If the cut portion 291 is formed at the upper side of the cell cover 200, for example the upper cover 210, as above, the flame or gas may be induced to be discharged in a preset upper direction.

In this case, even if thermal runaway occurs at any one battery cell 100, the flame or gas generated in the battery cell 100 may be discharged only through the upper side of the cell cover 200. Accordingly, the flame or gas may not propagate to other battery cells 100 disposed adjacent to the side of the battery cell 100 in which the thermal runaway occurs. That is, even if thermal runaway occurs at one battery cell 100, the effect of the thermal runaway on other battery cells 100 may be minimized.

Moreover, according to the cut configuration as in this embodiment, the effect of preventing thermal runaway propagation between cell units may be further improved. More specifically, seeing the embodiment of FIG. 18, the portion of the cell cover 200 in which the cut portion 291 is formed may be deformed in shape due to the discharge pressure of the venting gas when the venting gas is discharged. In addition, due to this shape deformation, the cut portion 291 may be deformed into a widened portion, namely the opening 295, so that the open area may be widened.

In particular, as shown in FIG. 17, when the cut portion 291 is configured in a slit shape in which both ends are branched, at least one deformation part may be formed due to discharge of the venting gas. That is, referring to the embodiment of FIG. 18, when the venting gas is discharged to the cut portion 291 as shown in FIG. 17, four deformation parts K1, K1', K2, K3 may be formed. At this time, the left deformation part K1 may be formed by the three cut lines J1, J2, J3 of FIG. 17, and the right deformation part K1' may be formed by the three cut lines J1, J2', J3' of FIG. 17. In addition, the front deformation part K2 may be provided by the two front cut lines J2, J2' of FIG. 17, and the rear deformation part K3 may be provided by the two rear cut lines J3, J3' of FIG. 17. Here, the four deformation parts K1, K1', K2, K3 may be configured to be erected in a substantially vertical direction (Z-axis direction) on the plane (X-Y plane) formed by the upper cover 210 of the cell cover 200. For example, the four deformation parts K1, K1', K2, K3 may be formed to protrude substantially vertically upward from the upper cover 210.

According to this embodiment, due to the plurality of deformation parts K1, K1', K2, K3, it is possible to more effectively suppress the venting gas from moving to other cell covers 200. In particular, the left deformation part K1 may guide the flow direction of the venting gas discharged upward through the opening 295 to be well formed in the upper direction (+Z-axis direction), while suppressing the venting gas flowing in the left direction at the upper portion of the cell cover 200. In addition, the right deformation part K1' may guide the flow direction of the venting gas discharged upward through the opening 295 to be well formed in the upward direction (+Z-axis direction), and prevent the venting gas from flowing in the right direction at the upper portion of the cell cover 200. Therefore, it is possible to more effectively block the propagation of heat or flame between the cell units stacked in the left and right direction. In addition, the front deformation part K2 and the rear deformation part K3 may suppress the venting gas discharged upward through the opening 295 from moving forward (-X-axis direction) and rearward (+X-axis direction). In particular, other cell units or bus bar assemblies may be disposed at the front side or the rear side of each cell unit, and according to this embodiment, it is possible to prevent the high-temperature venting gas or flame from moving to other cell units or bus bar assemblies.

Meanwhile, in this embodiment, the battery pack according to the present disclosure may further include a heat insulating material (not shown) or various injection-molded materials (not shown) inside the cell cover 200 or in the form of replacing a part of the cell cover 200. In this case, the cut portion 291, the perforation hole 250, or the like may be formed at the insulating material or the injection-molded materials. Moreover, if an insulating material or an injection-molded material is provided inside the cell cover 200, the cut portion or the perforation hole of the insulation material or the injection-molded material may be formed to have a position or shape corresponding to the cut portion 291 or the perforation hole 250 of the cell cover 200.

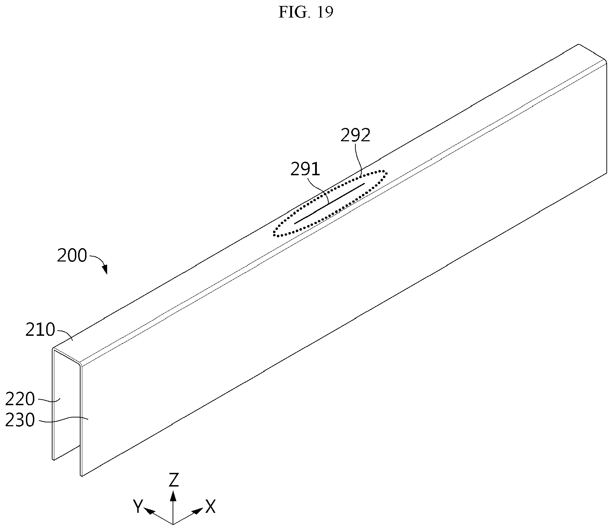

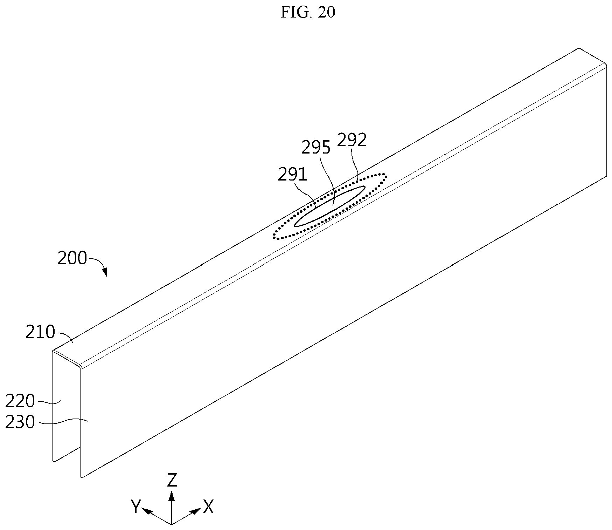

FIG. 19 is a perspective view schematically showing a cell cover 200 according to still another embodiment of the present disclosure. Also, FIG. 20 is a perspective view schematically showing that the cell cover 200 of FIG. 19 is deformed due to gas discharge or the like.

First, referring to FIG. 19, a perforated portion 292 may be formed around the cut portion 291. In particular, the perforated portion 292 may be formed in plural in the form of a dotted line along the periphery of the cut portion 291. In this case, since the perforated portion 292 is holes in the form of a dotted line, when thermal runaway occurs, the flame or gas may be discharged through the perforated portion 292 in the form of a dotted line. In addition, when the gas or flame is discharged, the flame or gas may be discharged through the opening 295 formed as the cut portion 291 is widened as shown in FIG. 20.

According to this embodiment, the gas or flame discharged through the cell cover 200 may be more quickly and smoothly discharged through the cut portion 291 and the perforated portion 292. In particular, in this embodiment, when gas or flame is generated, the gas or flame may be discharged primarily through the perforated portion 292. In addition, when the gas or flame is expanded to a certain level or more, the gas or flame may be discharged through the cut portion 291 secondarily.

Moreover, when a small amount of gas is ejected from the battery cell 100 in the initial stage of thermal runaway, the ejected gas may be primarily discharged to the outside of the cell cover 200 through the perforated portion 292. At this time, since the cut portion 291 is not opened, it may be prevented that the battery cell 100 is exposed to the outside through the opening 295 formed by the cut portion 291. In addition, when a large amount of gas is ejected from the battery cell 100 due to intensified thermal runaway, the cut portion 291 may be secondarily opened by the ejection pressure of the gas, thereby forming the opening 295. Accordingly, the large amount of gas is discharged to the outside through both the perforated portion 292 and the opening 295, so that the gas inside the cell cover 200 may be quickly and smoothly discharged to the outside. Therefore, according to this embodiment of the present disclosure, stepwise venting control according to the degree of gas generation may be possible.

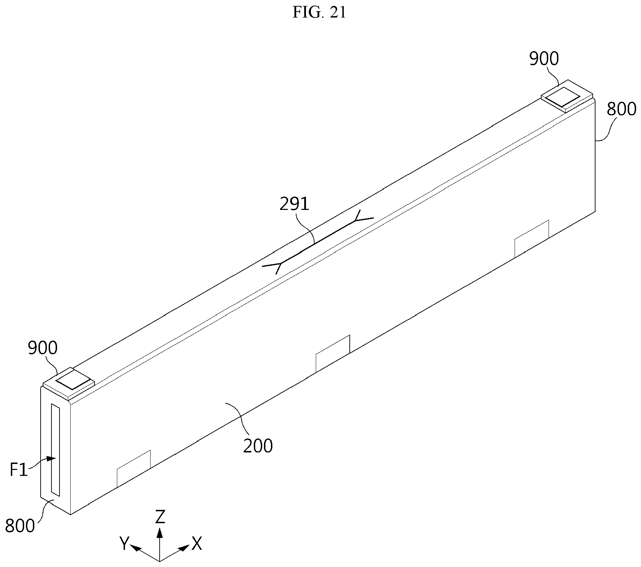

FIG. 21 is a perspective view schematically showing a part of a battery pack according to still another embodiment of the present disclosure.

Referring to FIG. 21, the battery pack according to the present disclosure may further include an end plate 800. The end plate 800 may be provided to at least one side of the cell cover 200. In particular, the end plate 800 may be provided to an exposed side among the various sides of the cell cover 200. For example, the end plate 800 may be coupled to the openings at the front and rear sides of the cell cover 200 where the electrode leads 110 are exposed. Moreover, the end plate 800 may be located at the outer side of the bus bar assembly 700 in the front and rear direction. The end plate 800 may include an electrically insulating material to secure electrical insulation from the bus bar assembly 700. In addition, the end plate 800 may include a material capable of securing mechanical rigidity to a certain level or more. For example, the end plate 800 may include a plastic and/or metal material.

According to this embodiment of the present disclosure, mechanical and electrical safety of the bus bar assembly 700 may be improved. In addition, in this case, it may be more advantageous in terms of preventing thermal runaway propagation or securing safety for human life by controlling the emission of gas or flame.

In the embodiment of the FIG. 21, as indicated by F1, a discharge hole may be formed in the end plate 800. The discharge hole F1 may induce venting toward the end plate 800 when thermal runaway occurs at the pouch-type battery cell 100 accommodated inside the cell cover 200. The discharge hole F1 of the end plate 800 may be formed in various shapes. For example, the discharge hole F1 may be formed in the same shape as the perforation hole 250, the cut portion 291 or the perforated portion 292 of FIGS. 16 to 20.

In addition, the battery pack according to the present disclosure may further include a cover terminal 900 as shown in FIG. 21. The cover terminal 900 may be electrically connected to the bus bar assembly 700 and function as an electrode terminal of each battery cell 100 or each cell unit. Therefore, by connecting the cover terminals 900 to each other, a plurality of cell units may be electrically connected to each other.

In particular, the cover terminal 900 may be provided to an outer side of the cell cover 200 or the end plate 800. For example, the cover terminal 900 may be located at the upper side of the cell cover 200, namely at the upper cover 210, as shown in FIG. 21. In this case, a connection member for connecting the cover terminals 900 of a plurality of cell units to each other may be located at the upper portion of the cell unit stack to electrically connect the cell units to each other. Alternatively, the cover terminal 900 may be located at a side surface or a lower portion of the cell cover 200, and/or at the end plate 800. For example, the cover terminal 900 may be located at the upper portion of the end plate 800 or at the upper portion of the bus bar assembly 700.

According to this embodiment of the present disclosure, a plurality of battery cells 100 or a plurality of cell units may be electrically connected more easily.

Moreover, in the embodiment in which the end plate 800 and/or the cover terminal 900 is provided, the electrode lead 110 of the battery cell 100 accommodated inside the cell cover 100 may not be exposed to the outside. For example, in each cell unit, the cover terminal 900 may be exposed to the outside to function as a terminal for electrical connection of the cell unit, and the electrode lead 110 may be covered by the end plate 800 and accommodated in the inner space without being exposed to the outside.

Alternatively, the bus bar terminal provided to the bus bar assembly 700 may be exposed to the outside to function as a terminal of the cell unit.

The battery pack according to the present disclosure may further include a separate end cover formed to surround the outer side of the cell cover 200. The end cover may be configured to surround one cell cover 200 or surround a plurality of cell covers 200 at once.

Meanwhile, in the various embodiments as above, the configuration in which one battery cell 100 is surrounded in one cell cover 200 has been described mainly, but a plurality of battery cells 100 may also be surrounded in one cell cover 200. This will be described in more detail with reference to FIG. 22.

FIG. 22 is an exploded perspective view schematically showing a pouch-type battery cell and a cell cover accommodated inside a battery pack according to another embodiment of the present disclosure.

Referring to FIG. 22, two or more pouch-type battery cells 100 may be surrounded in one cell cover 200. More specifically, in the embodiment of FIG. 22, in a state in which two pouch-type battery cells 100 are arranged in the left and right direction (Y-axis direction), one cell cover 200 may be configured to cover the two battery cells 100 together. In this case, one cell cover 200 may be configured to cover the left portion, the right portion, and the upper portion of the cell stack in which the two pouch-type battery cells 100 are stacked.

This embodiment of FIG. 22 is only different in that two or more battery cells 100 are accommodated in the cell cover 200, and the descriptions of the various embodiments described above may be applied identically or similarly. Therefore, FIG. 22 will not be described in more detail.

In addition, when a plurality of cell covers 200 are stacked on the battery pack 10, an adhesive member may be interposed between the cell covers 200. For example, two cell covers 200, for example a first cover and a second cover, may be disposed adjacent to each other, and the first side cover 220 of the first cover and the second side cover 230 of the second cover may be stacked to face each other. At this time, an adhesive member may be interposed between the first side cover 220 of the first cover and the second side cover 230 of the second cover to adhesively fix them to each other.

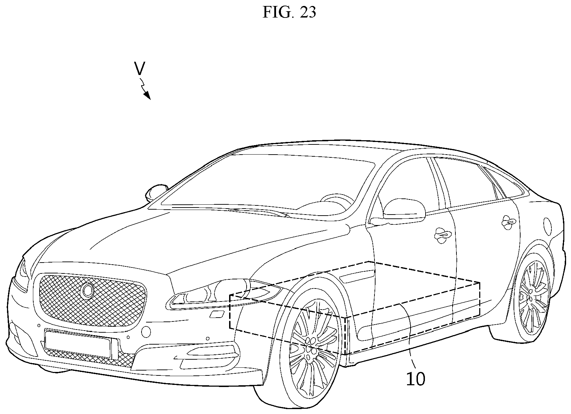

FIG. 23 is a diagram schematically showing a vehicle according to an embodiment of the present disclosure.

Referring to FIG. 23, a vehicle V according to the present disclosure may include the battery pack 10 according to the present disclosure as described above. Here, the vehicle V according to the present disclosure may include, for example, a predetermined vehicle V using electricity as a driving source, such as an electric vehicle or a hybrid electric vehicle. In addition, the vehicle according to the present disclosure may further include other various components included in a vehicle, such as a vehicle body, a motor, or the like, in addition to the battery pack 10 according to the present disclosure.

In addition, the cell assembly according to another embodiment of the present disclosure may include a pouch-type battery cell 100 and a cell cover 200 in the battery pack 10 according to the present disclosure described above, except for the pack case 300.

In particular, in the cell assembly according to the present disclosure, the cell cover 200 may be configured to surround both sides of the accommodation portion of the pouch-type battery cell 100 and one side of the edge portion (sealing portion). In addition, the cell cover 200 may be configured to be exposed to the outside without surrounding the other side of the edge portion (sealing portion) of the pouch-type battery cell 100.

For example, the cell assembly according to the present disclosure may be a cell unit as indicated by U1 in FIG. 2, a cell unit as indicated by U2 in FIG. 6, or a cell unit as shown in FIG. 22. In this case, the cell cover 200 included in the cell assembly may have an N-shape and be configured to surround one or more pouch-type battery cells 100 and surround both sides and the upper edge portion E1 of the accommodation portion R of the battery cell 100. Alternatively, the cell cover 200 included in the cell assembly may have a U-shape and be configured to cover both sides and the lower edge portion E2 of the accommodation portion R of at least one pouch-type battery cell 100.

For the cell assembly according to the present disclosure, the contents of the battery cell 100 and the cell cover 200 of the battery pack according to the present disclosure described above may be applied identically or similarly, and thus it will not be described in detail. In addition, the cell assembly according to the present disclosure may further include at least one of the taping member 600, the bus bar assembly 700, the end plate 800, and the cover terminal 900 described above.

Meanwhile, in this specification, terms indicating directions such as "upper", "lower", "left", "right", "front", and "rear" are used, but these terms are just for convenience of explanation, and it is obvious to those skilled in the art that these terms may vary depending on the location of an object or the position of an observer.

Also, in this specification, the terms such as "upper", "lower", "left", "right", "front", and "rear" may be expressed by other terms, particularly ordinal numbers such as "first", "second", and "third". For example, the upper cover 210 of the cell cover 200 may be expressed as a third side cover. In addition, the front open end, the rear open end, and the lower open end of the cell cover 200 may be expressed as a first open end, a second open end, and a third open end, respectively. Also, for the pouch-type battery cell 100, the lower edge portion E2 may be expressed as a first edge portion or a first surface, and the upper edge portion E1 may be expressed as a second edge portion or a second surface. In addition, in the pouch-type battery cell 100, the left accommodation portion and the right accommodation portion may be represented by a third surface and a fourth surface, respectively.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Reference Signs**

| | | | |
|---|---|---|---|
| 10: | battery pack | 100: | pouch-type battery cell |
| 110: | electrode lead | 200: | cell cover |
| 210: | upper cover | 220: | first side cover |
| 230: | second side cover | 240: | protrusion |
| 250: | perforation hole | 270: | insulation member |
| 300: | pack case | 301: | heatsink |
| 310: | upper case | 311: | upper heatsink |
| 312: | thermal resin | 320: | lower case |
| 321: | lower heatsink | 322: | coupling groove |
| 323: | unit heatsink | 324: | interval |
| 326: | thermal resin | 400: | battery management system |
| 500: | battery disconnect unit | 600: | taping member |
| 700: | bus bar assembly | 800: | end plate |
| 900: | cover terminal | | |

## Claims

1. A battery pack, comprising:
a plurality of pouch-type battery cells stacked in at least one direction;
a pack case configured to accommodate the pouch-type battery cells in an inner space thereof; and
a cell cover configured to at least partially surround at least some pouch-type battery cells among the plurality of pouch-type battery cells in the inner space of the pack case.

2. The battery pack according to claim 1,
wherein the cell cover is configured to support the plurality of pouch-type battery cells in a standing state.

3. The battery pack according to claim 1,
wherein the cell cover is configured to partially surround the pouch-type battery cell such that at least one side of the surrounded pouch-type battery cell is exposed toward the pack case.

4. The battery pack according to claim 1,
wherein the pouch-type battery cell includes an accommodation portion in which an electrode assembly is accommodated and an edge portion provided around the accommodation portion, and
the cell cover is configured to surround both sides of the accommodation portion of the surrounded pouch-type battery cell and a part of the edge portion.

5. The battery pack according to claim 4,
wherein the cell cover is configured to cover both sides of the accommodation portion of the surrounded pouch-type battery cell and an upper edge portion.

6. The battery pack according to claim 5,
wherein the cell cover includes:
an upper cover configured to surround an upper part of the upper edge portion of the pouch-type battery cell;
a first side cover configured to extend in a lower direction from one end of the upper cover and surround an outer side of the accommodation portion at one side of the surrounded pouch-type battery cell; and
a second side cover configured to extend in the lower direction from the other end of the upper cover at a location spaced apart from the first side cover and surround an outer side of the accommodation portion at the other side of the surrounded pouch-type battery cell.

7. The battery pack according to claim 4,
wherein the pouch-type battery cell includes a sealing portion and a non-sealing portion as the edge portion, and
the cell cover is configured to surround at least a part of the sealing portion of the pouch-type battery cell and allow the non-sealing portion to be exposed.

8. The battery pack according to claim 1, further comprising:
a taping member configured to couple different ends of the cell cover to each other.

9. The battery pack according to claim 1,
wherein the cell cover is configured in the form of one bent plate.

10. The battery pack according to claim 1,
wherein the pack case includes a heatsink, and
the plurality of pouch-type battery cells are coupled to the heatsink.

11. The battery pack according to claim 10,
wherein a thermal resin is interposed between the heatsink and the plurality of pouch-type battery cells.

12. The battery pack according to claim 10,
wherein the heatsink includes a plurality of unit heatsinks spaced apart from each other.

13. The battery pack according to claim 12,
wherein an end of the cell cover is interposed in a separated space between the plurality of unit heatsinks.

14. The battery pack according to claim 10,
wherein the heatsink includes an upper heatsink and a lower heatsink disposed at an upper portion and a lower portion of the cell cover, respectively.

15. The battery pack according to claim 1,
wherein the cell cover is configured such that at least one side end thereof is fitted into the pack case.

16. The battery pack according to claim 1,
wherein the cell cover has a perforation hole formed to discharge a flame or gas generated at the pouch-type battery cell.

17. The battery pack according to claim 16,
wherein the perforation hole of the cell cover is provided to be widened when swelling occurs at the pouch-type battery cell.

18. The battery pack according to claim 1,
wherein the cell cover includes a cut portion configured to discharge a flame or gas generated at the pouch-type battery cell.

19. The battery pack according to claim 18,
wherein the cell cover includes a perforated portion formed in a dotted line form along a periphery of the cut portion.

20. The battery pack according to claim 1, further comprising:
a battery management system accommodated in the inner space of the pack case.

21. A vehicle, comprising the battery pack according to any one of claims 1 to 20.

22. A cell assembly, comprising:
a pouch-type battery cell; and
a cell cover configured to at least partially surround both sides and one edge portion of an accommodation portion of the pouch-type battery cell and to expose the other edge portion of the pouch-type battery cell.
